# EUROPEAN PATENT SPECIFICATION

(11) **EP 2 456 976 B1**
(45) Date of publication and mention of the grant of the patent: **29.04.2015**
(21) Application number: 09847665.8
(22) Date of filing: 12.11.2009
(51) Int. Cl.: F04B 17/00

(54) **PLIANT OR COMPLIANT ELEMENTS FOR HARNESSING THE FORCES OF MOVING FLUID TO TRANSPORT FLUID OR GENERATE ELECTRICITY**
BIEGSAME ODER NACHGIEBIGE ELEMENTE ZUR NUTZUNG DER KRÄFTE EINER SICH BEWEGENDEN FLÜSSIGKEIT FÜR FLÜSSIGKEITSTRANSPORT ODER STROMERZEUGUNG
ELÉMENTS DÉFORMABLES OU FLEXIBLES POUR EXPLOITER LES FORCES D UN FLUIDE EN MOUVEMENT AFIN DE TRANSPORTER LE FLUIDE OU DE PRODUIRE DE L ÉLECTRICITÉ

(30) Priority: 21.07.2009 US 227279 P
(43) Date of publication of application: 30.05.2012
(73) Proprietor: Pliant Energy Systems Llc, New York, New York 10001 (US)
(72) Inventor: FILARDO, Benjamin Pietro, New York New York 10022 (US)
(74) Representative: Clarke, Geoffrey Howard
(86) International application number: PCT/US2009/064241
(87) International publication number: WO 2011/011028

(56) References cited:
- EP-A1- 1 219 834
- EP-A2- 0 322 899
- US-A- 3 467 013
- US-A- 3 961 863
- US-A- 4 164 383
- US-A- 4 310 264
- US-A- 4 469 596
- US-A- 4 498 850
- US-A- 5 192 197
- US-B1- 6 424 079
- US-B2- 7 352 073

## Description

### PRIORITY CLAIM AND RELATED APPLICATIONS

This application claims priority to prior U.S. provisional patent application serial no. 61/227,279 entitled, "Compliant Elements," filed on July 21, 2009 (Attorney Docket no. 19861-003PV).

### BACKGROUND

The kinetic energy of a moving current of fluid has been harnessed by mankind for thousands of years. The first such mechanisms were used to perform kinetic energy-intensive tasks such as grinding grain or raising water from a river. Since the invention of the electromagnetic generator, this kinetic energy of moving fluid has been converted into electrical energy, for distribution and consumption by all manner of electrical-energy-powered devices.

The raising of water from a river to a higher elevation for human consumption or for the irrigation of fields is one of the oldest recorded uses of hydrokinetic energy. One such ancient mechanism is known as a noria, in which jugs or buckets are fixed to a water wheel. The jugs fill when submerged, and then empty into an aqueduct near the uppermost position along the wheel's rotation. In such a device, the river provides both the water and the energy required to move the water to a desired location.

Other methods for moving water have been developed over the centuries such as the hydraulic ram and wind-powered pumps, but today pumps powered by an electric motor or internal combustion engine usually perform such functions. For example reference is made to US 5 192 197 where a piezoelectric-powered pump is disclosed.

### SUMMARY

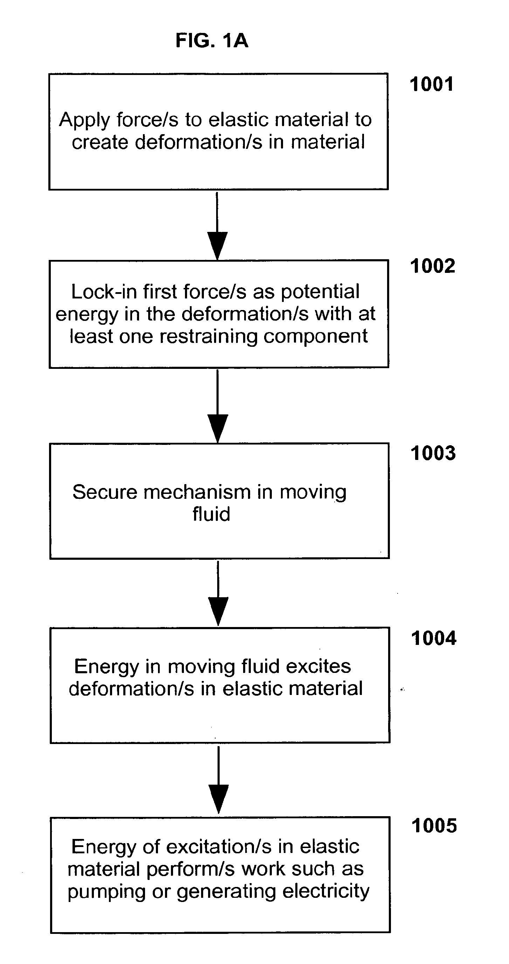

Compliant or "pliant" elements of the embodiments described herein may be assembled with force-induced deformations in the form of planar perturbations analogous to degenerate energy states. **FIG. 1A** illustrates how aspects of some elements of implementations may be created via force-induced deformations in the form of planar perturbations in one embodiment. The mechanisms may be created by applying force to a flexible article comprised substantially of elastic material to create deformations in the material **1001** into which these forces are locked-in as potential energy in the deformations **1002.** The mechanisms may be anchored in moving fluid **1003** whereupon the energy in the moving fluid excites the deformations in the elastic material **1004.** The energy transferred from the moving fluid into excitations in the elastic material may be harnessed to perform work such as pumping or generating electricity **1005.**

While the term "elastic" may be used to describe the material properties of elements of the flexible articles in these disclosures, flexible articles may, in another embodiment, be comprised primarily of rigid but articulated materials, such as may have a substantially continuous contact surface.

Aspects of the various implementations described herein facilitate the pumping of fluid from source to destination using the kinetic energy available in the fluid source itself, so long as the fluid source is moving. Compliant, or pliant elements may also have several advantages over, for example, a traditional noria that include at least potentially greater efficiency and less expense, and in some implementations the absence of any articulated moving parts, resistance to impact damage from water-born objects, resistance to becoming tangled in plants or other water-born objects, and a more gentle physical interaction with fish and other aquatic animals.

The pumping mechanisms of compliant elements can also be configured to generate electricity, whereby the kinetic energy of the fluid flowing through the pump is harnessed by an electromagnetic generator. Similar advantages of the compliant electricity generation elements of this invention exist as those which apply to the pump implementations. In addition, the electricity generation elements are suitable for "free-flow" hydro applications which do not require the costly and environmentally impactful construction of dams across waterways.

The various compliant elements described herein may be configured to perform work such as to pump fluid for the purpose of moving it from one place to another, or pump fluid for the purpose of generating electricity. The energy to power these pumps may be provided by the kinetic energy of the moving fluid in which these elements are secured.

According to one implementation, pliant elements or mechanisms are fabricated from deformed flexible ribbons of material configured so as to change shape under forces exerted by the flow of fluid moving across or through the mechanisms. One or more undulations are created in the flexible material during fabrication. The undulations may be created by taking a ribbon of flexible material, and applying a force to create undulations in the material, and then using at least one restraining component, or deformation-retention component, to prevent the ribbon from returning to its original unstrained state. The ribbons are secured to these restraining components via crenated strips which exhibit hyperbolic geometry.

In an implementation, the undulations of the mechanisms run parallel to the flow of the current in the moving fluid and the mechanisms are secured to a substrate or other immovable object preventing them from being carried away with the current. Fluid moving past or through the mechanisms exerts forces on the undulations of the ribbons, exciting the undulations and/or causing the undulations to travel down the ribbon in the direction of the moving current. Through a variety of means described below, the traveling undulations of the ribbons are converted into pumping action on fluid captured in the mechanisms.

According to an implementation, pliant mechanisms are comprised of a double layer of flexible ribbon material placed with planes parallel to one another and fixed to each other longitudinally but with a space between the two layers, which may be referred to as the interstitial space. A force is applied to the double ribbon to form undulations as above. The undulations cause the respective layers of the double-layered ribbon to be closer together or further apart in a periodic manner that corresponds with the positions of the undulations, creating pockets along the interstitial space. As the undulations move along the length of the double ribbon under the forces of the moving fluid, the pockets of interstitial space move with them.

In a pump implementation, the upstream end of the double-layered ribbon is open to incoming ambient fluid allowing fluid to enter the interstitial space where it becomes enclosed in an interstitial pocket and transported along the length of the double-layered ribbon. A reservoir at the downstream end of the double-layered ribbon collects the pockets of fluid as they arrive and diverts the fluid along at least one hollow conduit.

In a generator implementation, the upstream end of the double ribbon is closed to ambient fluid but open to at least one conduit filled with fluid in a closed-loop system. Fluid from the conduit fills the first pocket of interstitial space at the upstream end of the double ribbon and exits through a reservoir at the downstream end of the double ribbon, to be transported via at least one conduit back to the upstream pocket of interstitial space, and so on. A turbine may be placed at a location along the conduit to extract power from the moving fluid cycling through the conduit.

In another set of implementations, three or more undulating single-layered or double-layered ribbons, which are each attached along their outer edges to a rigid restraining member via crenated strips, are attached to each other along their inner edges via an inner connecting strip so that the three respective inner crenated strips form a triangle in cross section (where three undulating ribbons are utilized). As the waves undulate in unison, the triangle rotates partially clockwise and counterclockwise, and the triangle expands and contracts in area, which is to say that the summed lengths of the sides of the triangle increase and decrease. Through a variety of valve mechanisms described herein, the expansion and contraction of the triangles creates a peristaltic pump action which transports fluid, either for the purpose of drawing in ambient fluid and pumping it to a desired location in open-loop implementations, or for the purpose of powering an electromagnetic generator in closed-loop implementations.

In another implementation, two, three or more, undulating ribbons are connected longitudinally along their inner edges to a central elastic coil. An implementation using three undulating ribbons is described herein for illustrative purposes only and it is to be understood that other configurations with more or less than three ribbons are possible. If a restrained coil is twisted in the rotational direction of the spiral of the coil, the coil will become shorter in length and/or narrower in diameter, depending on how the coil is restrained. Likewise, if the coil is twisted in a direction opposite to the rotational direction of the spiral or coil, the coil will lengthen and/or increase in diameter, depending on how the coil is restrained. The three undulating ribbons in the implementation are affixed to a central coil so that as the undulations travel along the length of the mechanism parallel to the flow of fluid, the central coil will be twisted clockwise and counterclockwise, causing its diameter to increase and decrease, creating a peristaltic effect which moves fluid along a central core, for the purpose of pumping ambient fluid in an open-loop system, or for the purpose of powering a turbine to generate electricity.

It is to be understood that the elements described herein facilitate significant implementation flexibility/customization depending on a variety of factors including the requirements of a particular application. Furthermore, the various implementations described can function individually or be affixed to one another in scalable multiple arrays. In the pliant generating elements, the pumping action of multiple arrays can be summed to create higher fluid pressures more suitable for powering conventional turbines. Accordingly, a large area of fluid interacts with large areas of flexible ribbons which are the kinetic energy-receiving components of the mechanisms. Therefore, these mechanisms take energy dispersed in a relatively large volume of moving ambient fluid and concentrate that energy into a small volume of moving fluid at increased speed or pressure relative to the flowing ambient fluid.

For the sake of brevity and to facilitate visualization and comprehension of particular implementations and embodiments of the mechanisms described, the word "water" is used in the detailed description of these disclosures instead of the word "fluid". It is to be understood that all implementations utilizing the mechanisms described herein are operable to transport and/or be driven by a wide variety of liquids, gases or any other substances exhibiting fluidic behavior.

### BRIEF DESCRIPTION OF THE FIGURES

**FIG. 1A** illustrates how aspects of some characteristics of some elements of implementations may be created via force-induced deformations in the form of planar perturbations in one embodiment;
**FIG. 1B** illustrates one method for assembling a crenated strip in one embodiment;
**FIG. 1C** illustrates how a single layered flexible ribbon may be formed in an embodiment;
**FIGs. 2-3** illustrate how a crenated strip may be formed in an embodiment;
**FIGs.4-5** illustrate how a frond may be combined with crenated strips, in an embodiment;
**FIG. 6** illustrates a pressure differential across wave undulations under operation of a frond in an embodiment;
**FIG. 7** illustrates the how a double layered ribbon may be formed in an embodiment;
**FIGs. 8-9** illustrate a method of forming double crenated strips in an embodiment;
**FIGs. 10-11** illustrate how a double-layered frond unit may be formed in an embodiment;
**FIGs. 12A** and **12B** illustrate how pockets may be created by deforming double layers of flexible ribbon in elevation and perspective respectively in an embodiment;
**FIGs. 13A** and **13B** illustrate an alternative way pockets may be created by deforming double layers of flexible ribbon which are affixed to one another in another embodiment;
**FIG. 14** illustrates a longitudinal cross section through a double layered frond implementation under operation;
**FIG. 15** illustrates a longitudinal cross section through another double layered frond implementation under operation utilizing connecting strips;
**FIG. 16** illustrates a schematic cross section through the double layered frond implementation illustrated in **FIG. 14****;**
**FIG. 17** illustrates a schematic cross section through the double layered frond implementation illustrated in **FIG. 15****;**
**FIGs. 18A-E** illustrate cross section cuts through a double layered frond implementation with crenated strips that are substantially fixed in their cross-sectional dimensions under operation;
**FIGs. 19A-E** illustrate cross section cuts through a double layered frond implementation in which the crenated strips are substantially elastic in their cross-sectional dimension and the ribbons are substantially fixed in their cross-sectional dimension under operation;
**FIGs. 20A-E** illustrate cross section cuts through a double layered frond implementation where the cross-sectional dimensions of the ribbons and crenated strips both vary under operation;
**FIG. 21** illustrates positions within the cycle of operation that the section cuts of **FIGs. 18A-E, FIGs. 19A-E** and **FIGs. 20A-E** are taken in one implementation;
**FIG. 22A** illustrates the double layered frond implementation of **FIGs. 18A-E** in elevation;
**FIG. 22B** illustrates a perspective view of **FIG. 22A****;**
**FIG. 23A** illustrates the double layered frond implementation of **FIGs. 19A-E** in elevation;
**FIG. 23B** illustrates a perspective view of **FIG. 23A****;**
**FIGs**. **24A-C** illustrate cross-section cuts through a double-layered frond implementation during one quarter of a cycle of operation;
**FIG. 24D** illustrates the locations within the wave bulge undulation cycle at which the section cuts of **FIGs. 24A-C** were taken.
**FIGs. 25A-C** illustrate cross-section cuts through a double layered frond implementation with an auxetic interstitial structure, during one quarter of a cycle of operation;
**FIG. 26** illustrates the locations within the cycle of operation at which the section cuts of **FIGs. 25A-C** are taken in one implementation;
**FIG. 27** illustrates an auxetic hexagon in one implementation;
**FIGs. 28-29** illustrate behavior of an auxetic hexagon structure in one implementation;
**FIGs. 30A-C** illustrate cross section cuts through a double layered frond implementation in which ribbons are substantially non-elastic in cross-sectional dimension and remain constant in cross-sectional dimension under operation with an extruded parallelepiped-like interstitial structure;

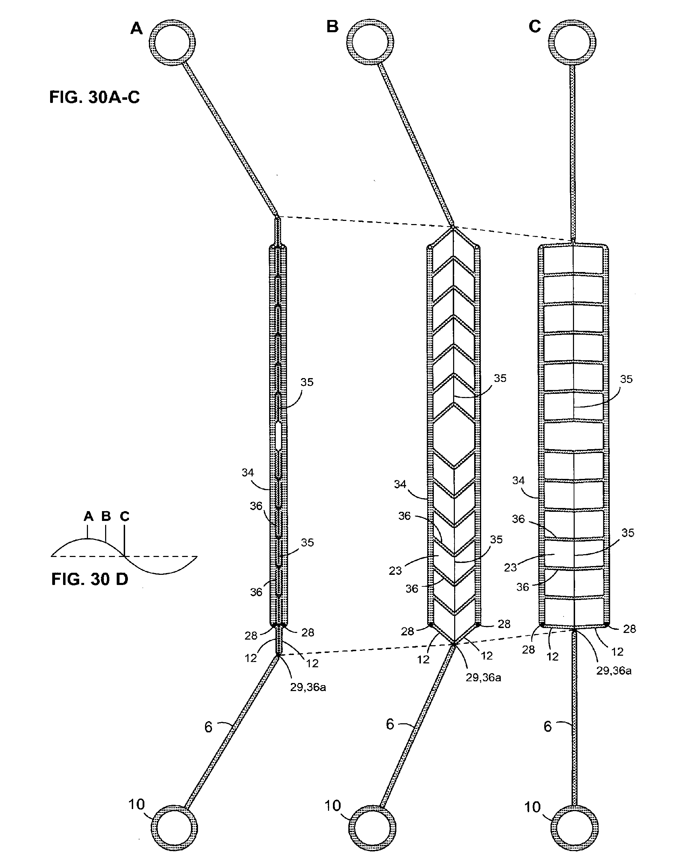

**FIG. 30** **D** illustrates the locations within the wave undulation cycle at which the section cuts of **FIGs. 30A-C** are taken;

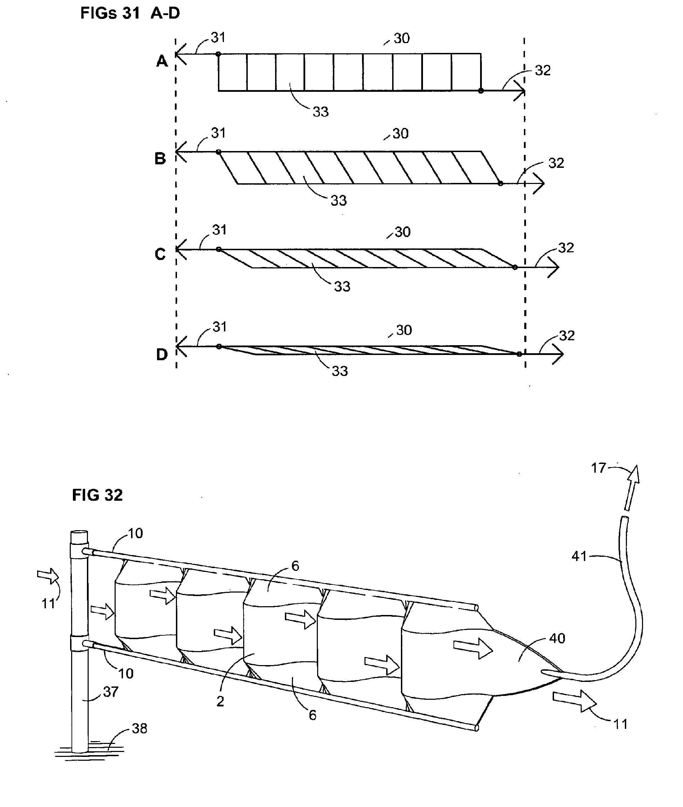

**FIGs. 31A-D** illustrate aspects of a double layered frond implementation whereby the second interstitial structure will decrease in one direction when forces are exerted upon it in another direction;
**FIG. 32** illustrates a double-layered frond pump implementation secured in a flowing stream of water in one embodiment;

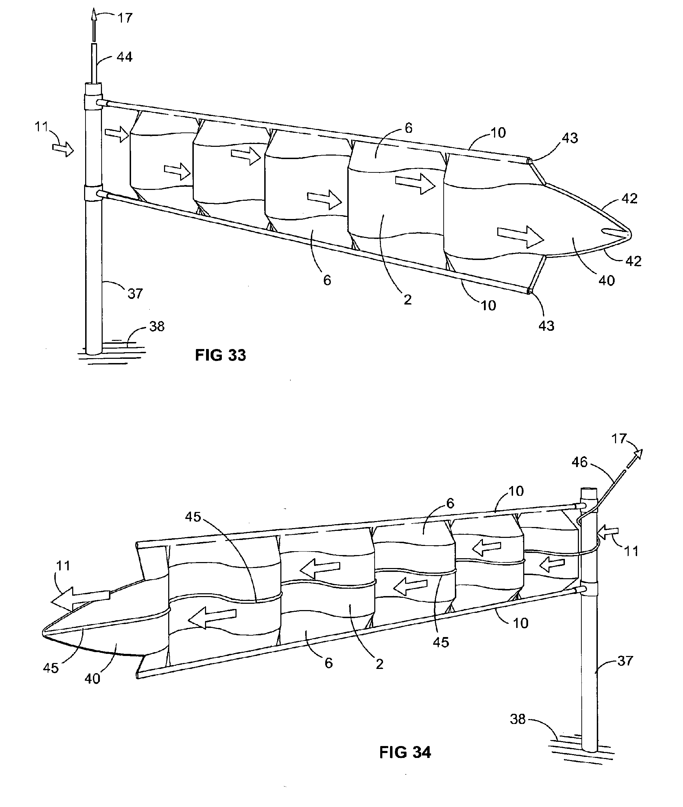

**FIG. 33** illustrates a frond pump implementation, in which water is collected in a flexible reservoir;
**FIG. 34** illustrates a frond pump implementation in which water collected is pumped along a flexible tube;

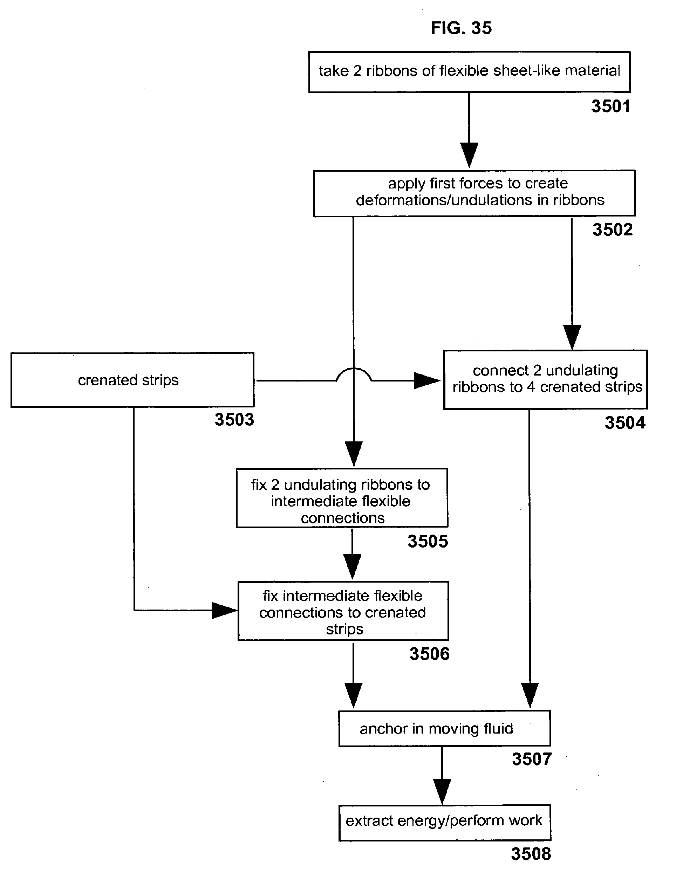

**FIG. 35** illustrates methods for assembling and implementing the double-layered frond mechanisms in some implementations;

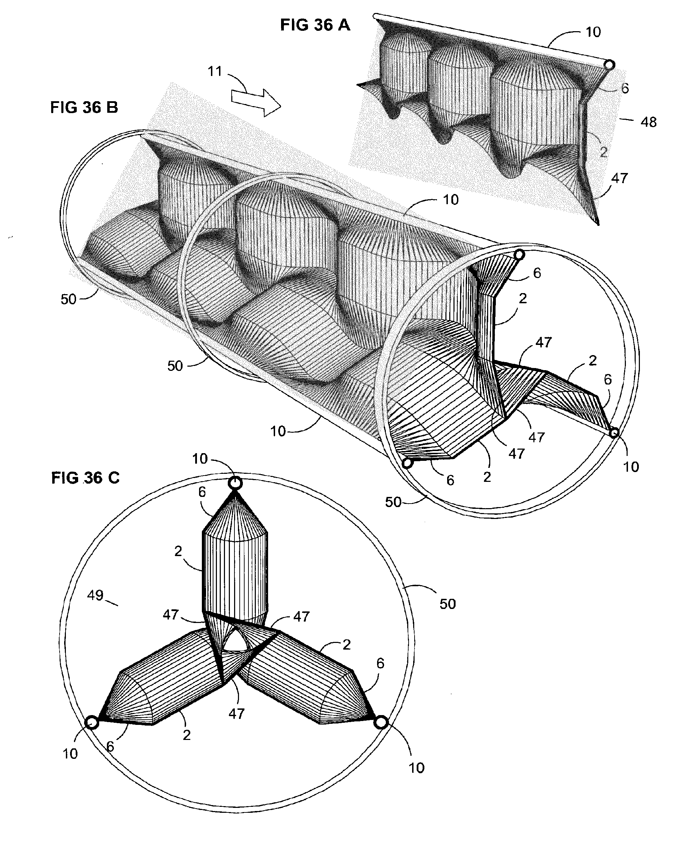

**FIG. 36A** illustrates an asymmetric frond in an embodiment;
**FIGs. 36B-C** illustrate an asymmetric frond unit implementation;

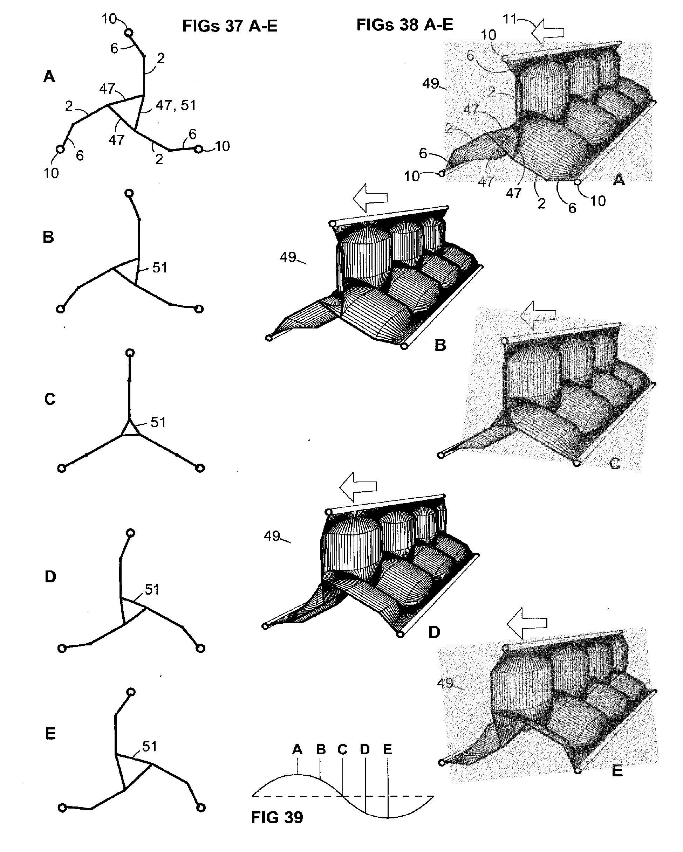

**FIGs. 37A-E** schematically illustrate a sequence of end-on views of an asymmetric frond unit during one half of a cycle of operation in an embodiment;
**FIGs. 38A-E** illustrate the sequence illustrated in **FIGs. 37A-E** from a perspective view showing the entire asymmetric frond unit in an embodiment;
**FIG. 39** illustrates the positions that the downstream-ends of the asymmetric fronds take within the wave bulge undulation cycle as shown in **FIGs. 37A-E** and **FIGs. 38A-E** in one implementation;

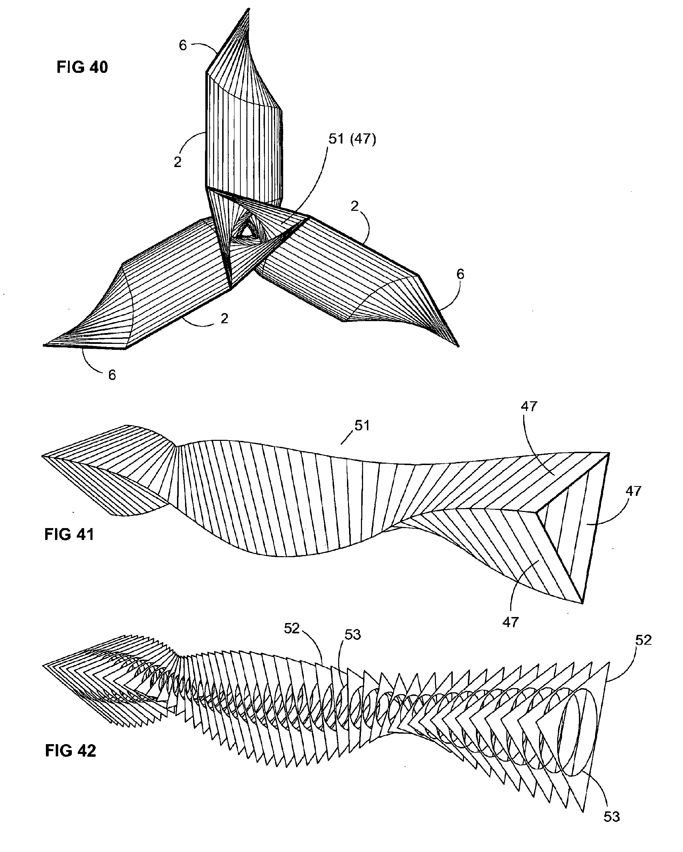

**FIGs. 40-41** illustrate the first triangular core in some single-layered frond implementations;
**FIG. 42** illustrates a series of elastic triangular membranes along a triangular core in one single-layered frond implementation;

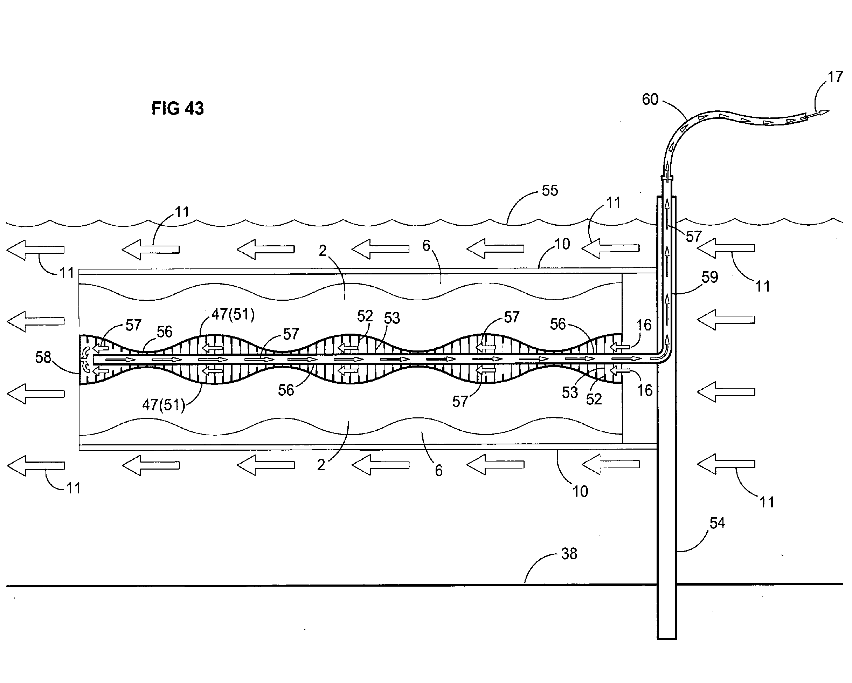

**FIG. 43** illustrates a schematic section through one pump implementation of one single-layered frond mechanism;

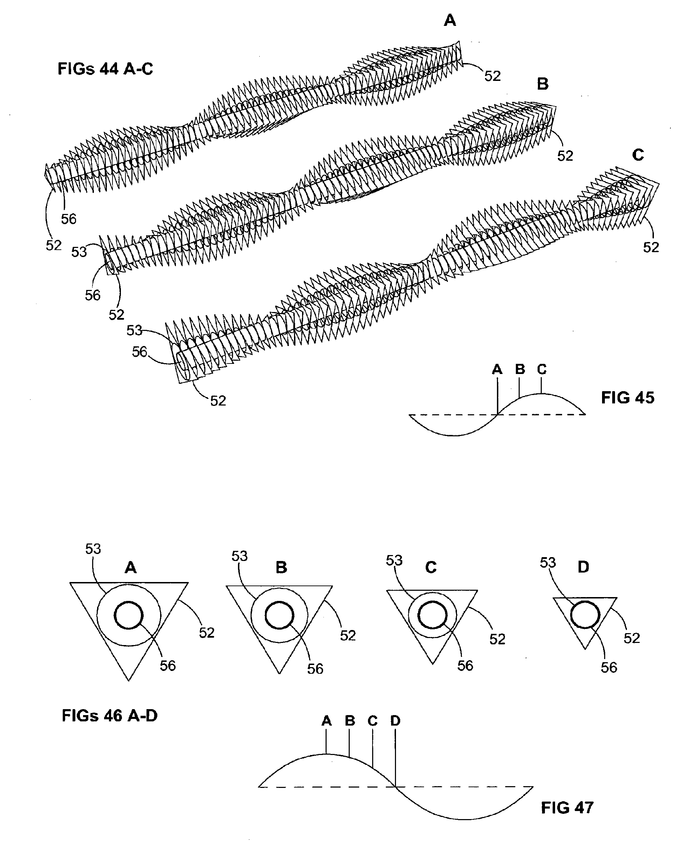

**FIGs. 44A-C** illustrate the behavior in a single-layered frond implementation of elastic triangular membranes at three moments of time correlating to three positions within one quarter of a wave bulge cycle in one embodiment;
**FIG. 45** illustrates three points in one quarter of a wave bulge cycle that correspond with **FIGs. 44A-C** in one implementation;
**FIGs. 46A-D** illustrate four cross-sectional views of a triangular core and membrane in one single-layered frond implementation;
**FIG. 47** illustrates the corresponding positions within one quarter of a wave undulation cycle that the cross-sections of **FIGs. 46A-D** were taken in one implementation;

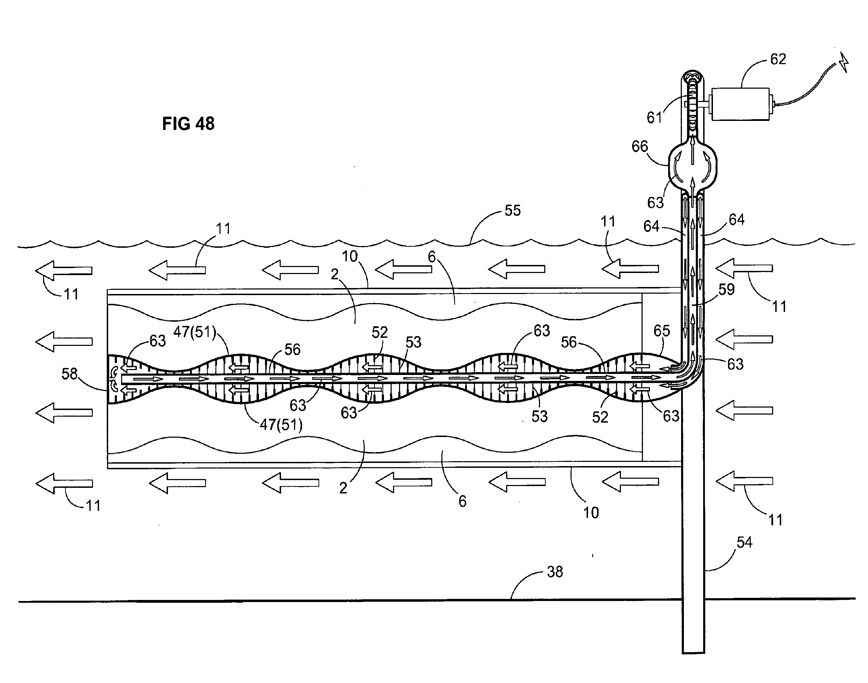

**FIG. 48** schematically illustrates a single-layered frond implementation in operation in which the pumping action of an asymmetric frond unit powers a turbine in one implementation;

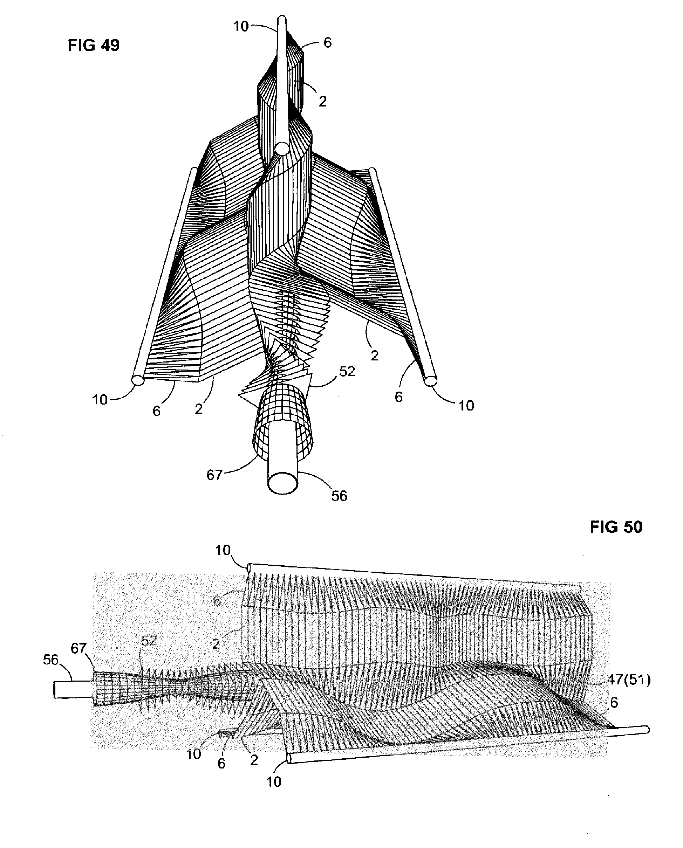

**FIGs. 49-50** illustrate exploded three dimensional views of another single-layered frond pump implementation utilizing an elastic core tube;

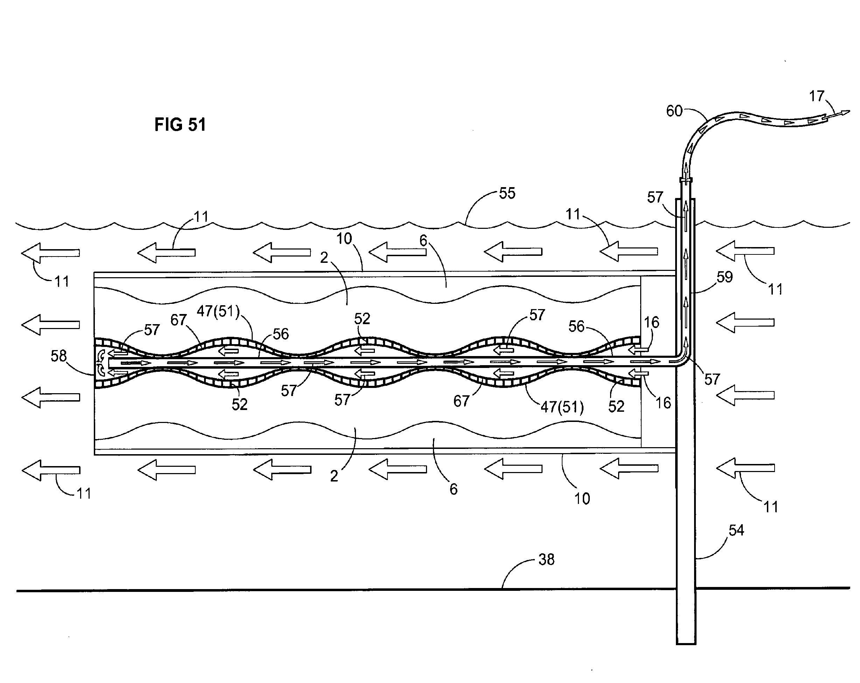

**FIG. 51** is a schematic illustration of a pump implementation in operation utilizing an elastic core tube;

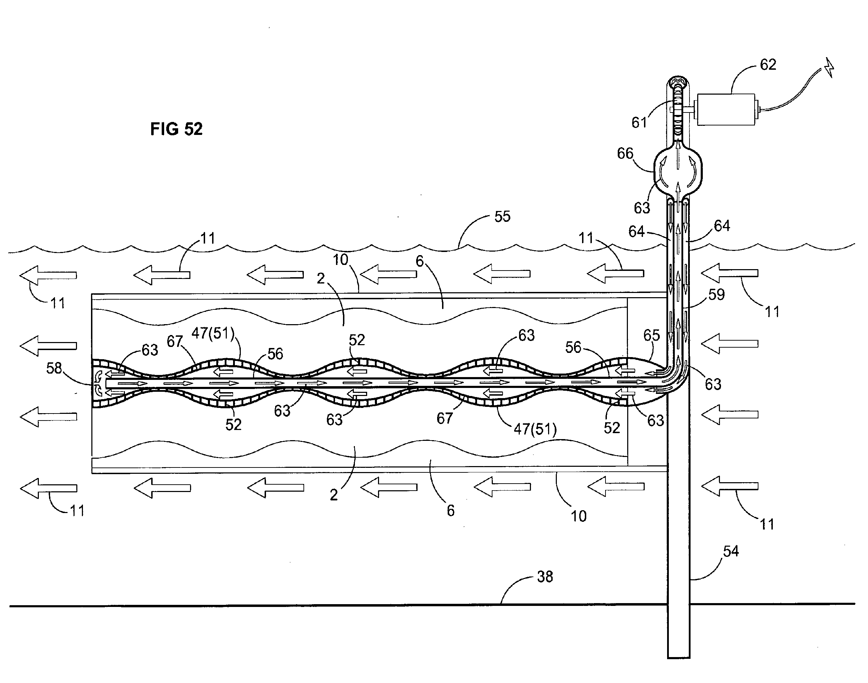

**FIG. 52** is a schematic illustration of a generator implementation in operation utilizing an elastic core tube;

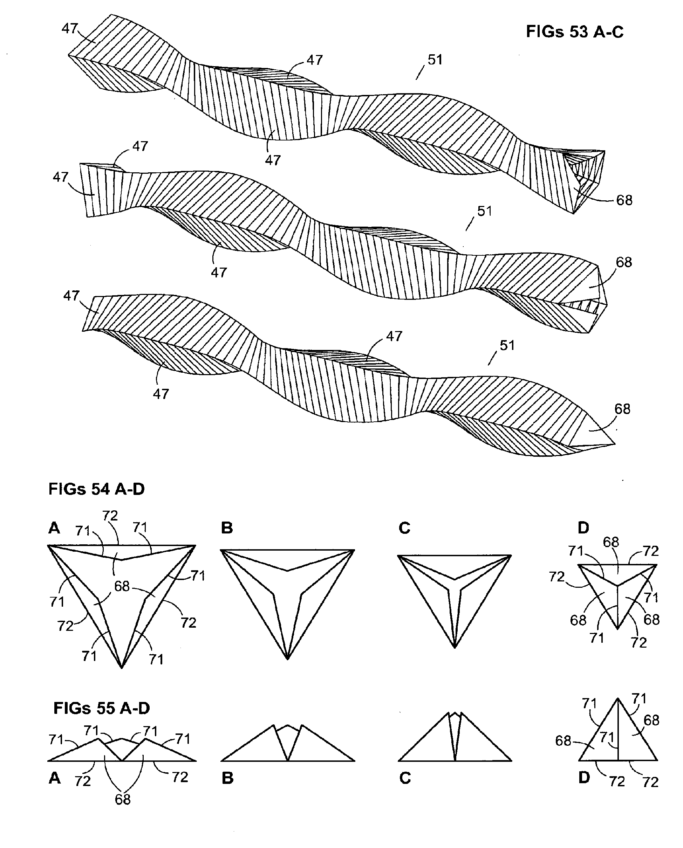

**FIGs. 53A-C** illustrate a first triangular core incorporating a triangular valve mechanism in one single-layered frond implementation;
**FIGs. 54A-D** illustrate end-on views of a triangular valve mechanism at four points in time under operation in one single-layered frond implementation;
**FIGs. 55A-D** illustrate side-on views of a triangular valve mechanism at the corresponding four points in time under operation illustrated in **FIGs. 54A-D** in one single-layered frond implementation;

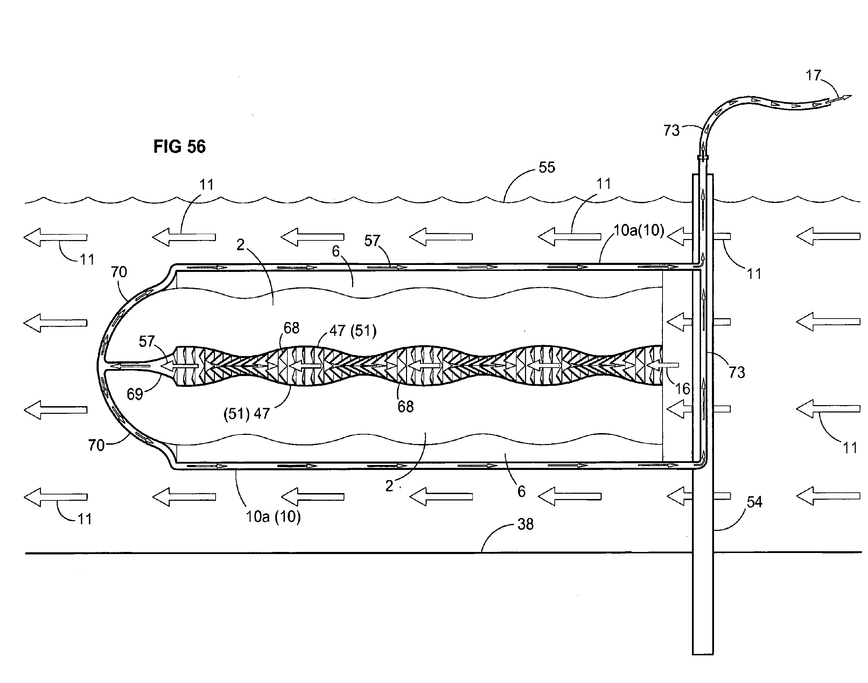

**FIG. 56****.** schematically illustrates a single-layered frond pump implementation in operation utilizing a triangular valve mechanism in one embodiment;

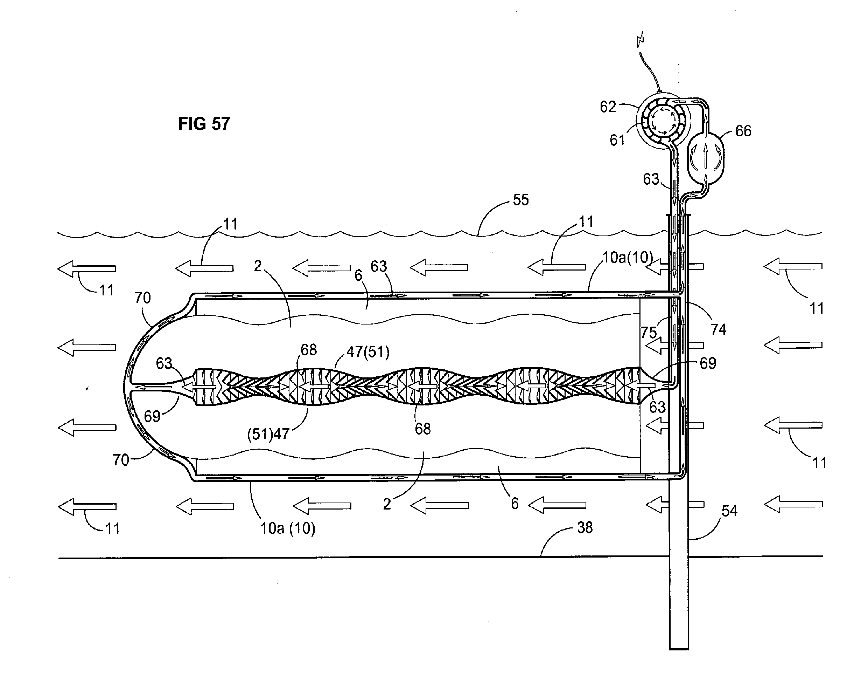

**FIG. 57** schematically illustrates a single-layered frond implementation similar to the pump implementation illustrated in **FIG. 56** but powering a turbine in one embodiment;

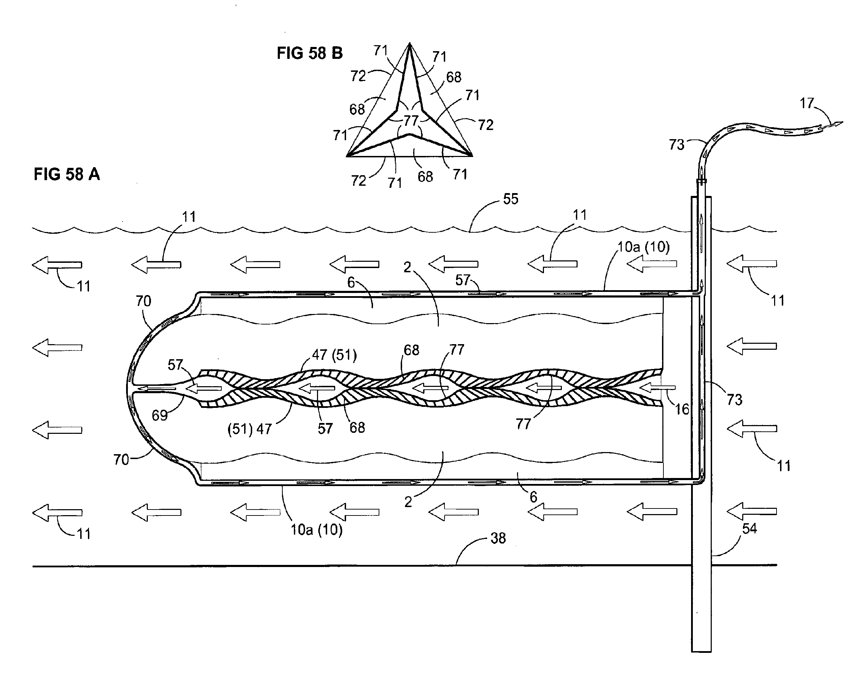

**FIG. 58A** illustrates another single-layered-frond pump implementation similar in design and operation to the third single-layered-frond pump implementation illustrated in **FIG. 56** but utilizing inner connecting strips in one embodiment;
**FIG. 58B** is a view of the first triangular core looking down its longitudinal axis illustrating how the inner connecting strips form an inverted hexagon in one implementation;

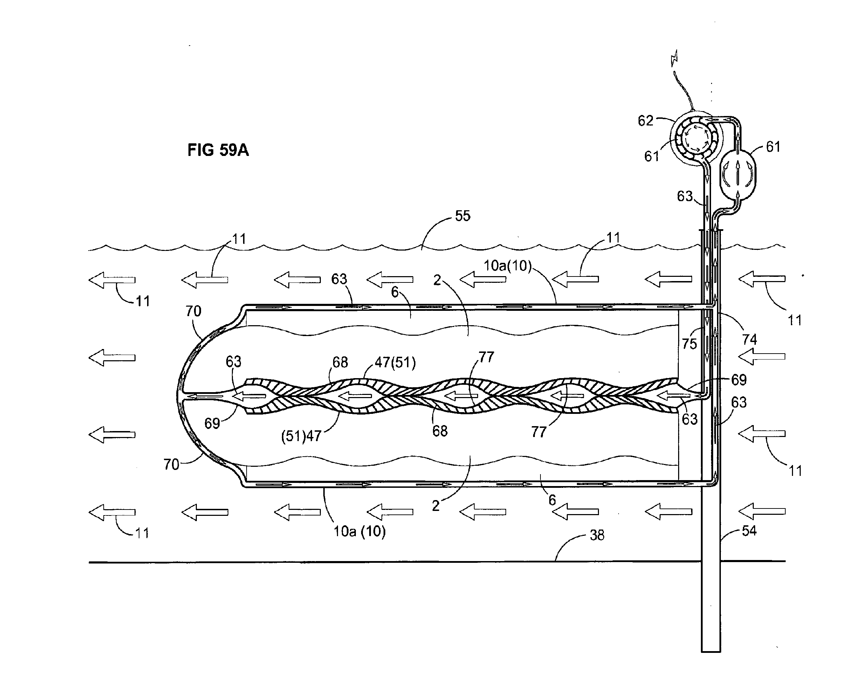

**FIG. 59A** illustrates another single-layered frond generator implementation with the addition of inner connecting strips and tube in one embodiment;

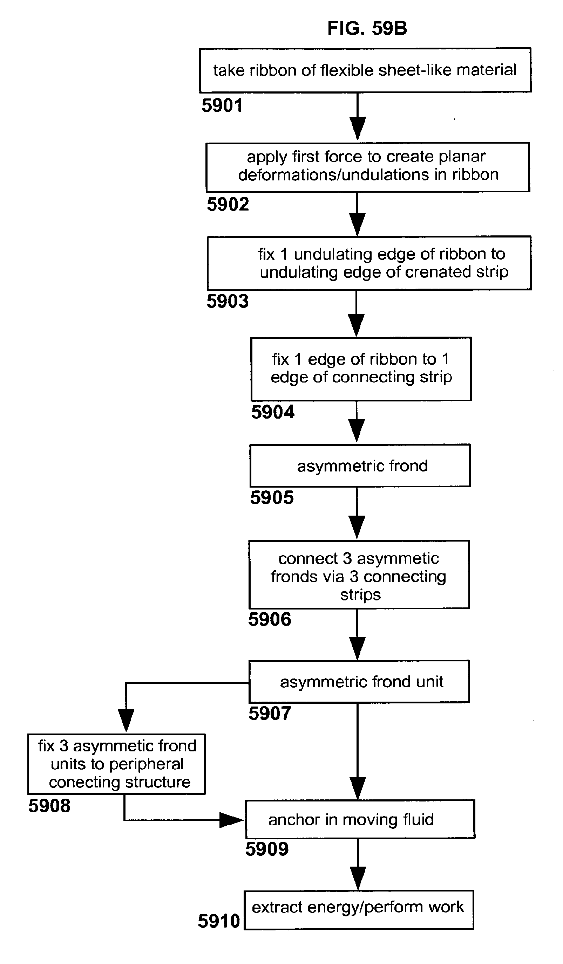

**FIG. 59B** illustrates a method for assembling and implementing single-layered frond mechanisms in one embodiment;

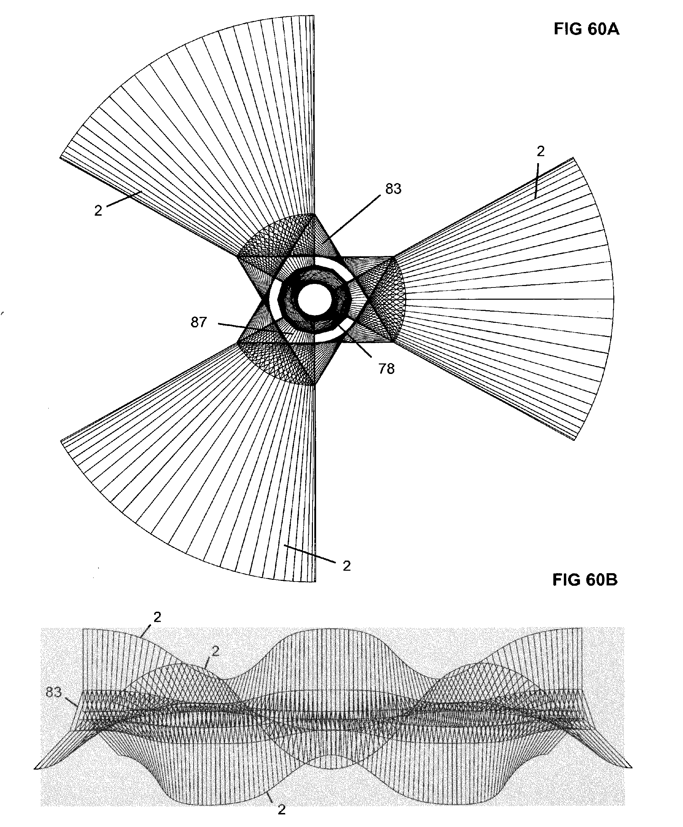

**FIG. 60A** is a wire-frame illustration of a spiral valve embodiments utilizing three connected flexible ribbons, as viewed down the longitudinal axis of the mechanism in one implementation;
**FIG. 60B** is a wire-frame illustration of a spiral valve embodiments utilizing three connected flexible ribbons, as viewed in elevation in one implementation;

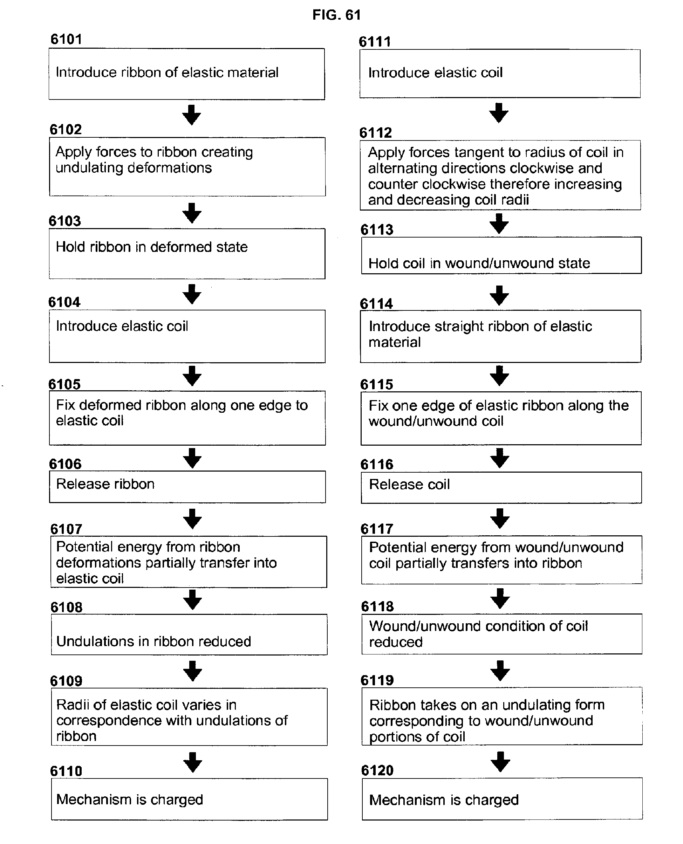

**FIG. 61** illustrates two examples of methods for the fabrication of the spiral valve implementations in some embodiments;

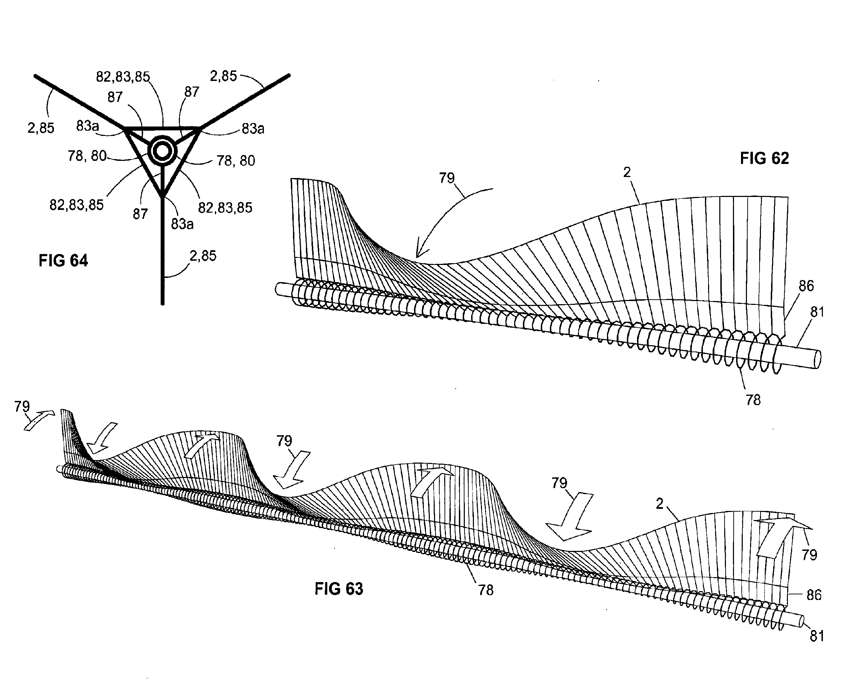

**FIG. 62** illustrates an aspect of one spiral valve implementation whereby one or more undulating ribbons are secured to a coil in one embodiment;
**FIG. 63** illustrates an aspect of a spiral valve implementation whereby the coil is sequentially wound and unwound by applied forces in one embodiment;
**FIG. 64** illustrates a schematic cross-section through an implementation utilizing a spiral valve mechanism;

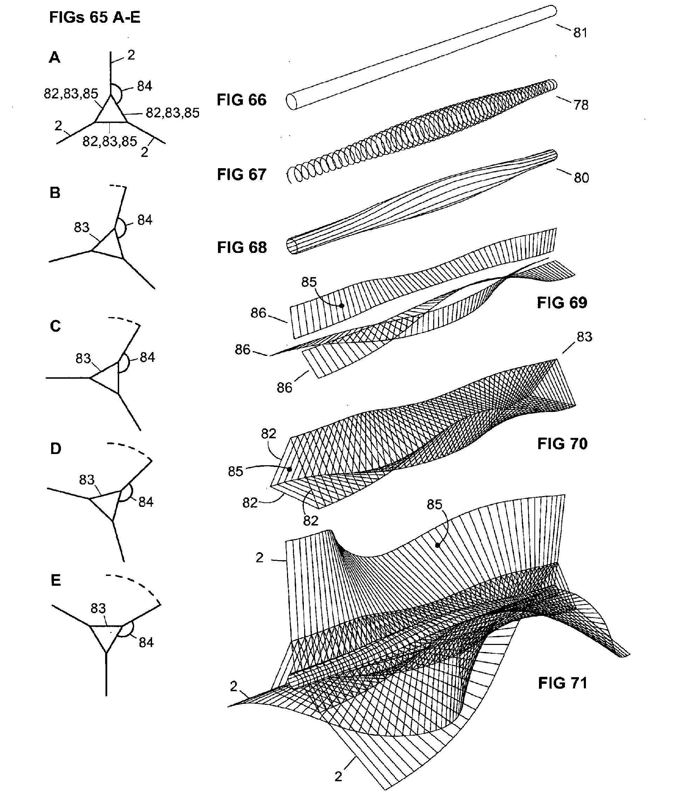

**FIG. 65A-E** illustrate schematic cross-sections through an implementation utilizing a spiral valve mechanism at different moments during operation;
**FIGs. 66-70** illustrate various components of a spiral valve implementation;
**FIG. 71** illustrates a spiral valve implementation incorporating the various components illustrated in **FIGs. 66-70** with flexible ribbons;

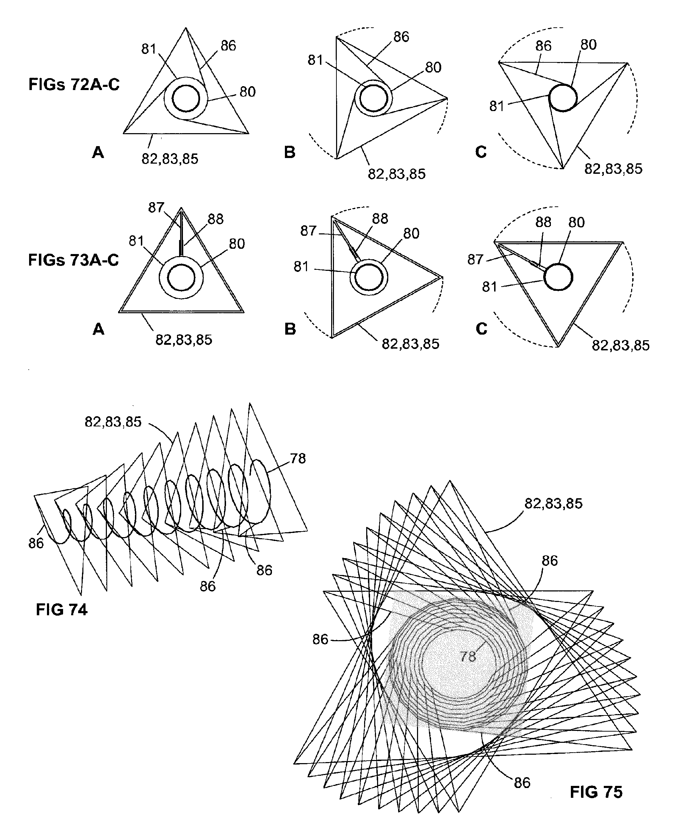

**FIGs. 72A-C** illustrate a spiral valve implementation with internal radial fins or arms attached to the elastic coil at points tangent to the circumference of the elastic coil;
**FIGs. 73A-C** illustrate a spiral valve implementation with radial rigid arms secured via rigid sliding connections to the triangular core;
**FIG. 74** is a wire-frame illustration of a component of a spiral valve implementation utilizing radial fins or arms to connect the second triangular core to the elastic coil;
**FIG. 75** is a wire-frame illustration of a component of a spiral valve implementation looking down the center of the longitudinal axis of a length of second triangular core utilizing radial fins or arms connecting the second triangular core to the elastic coil;

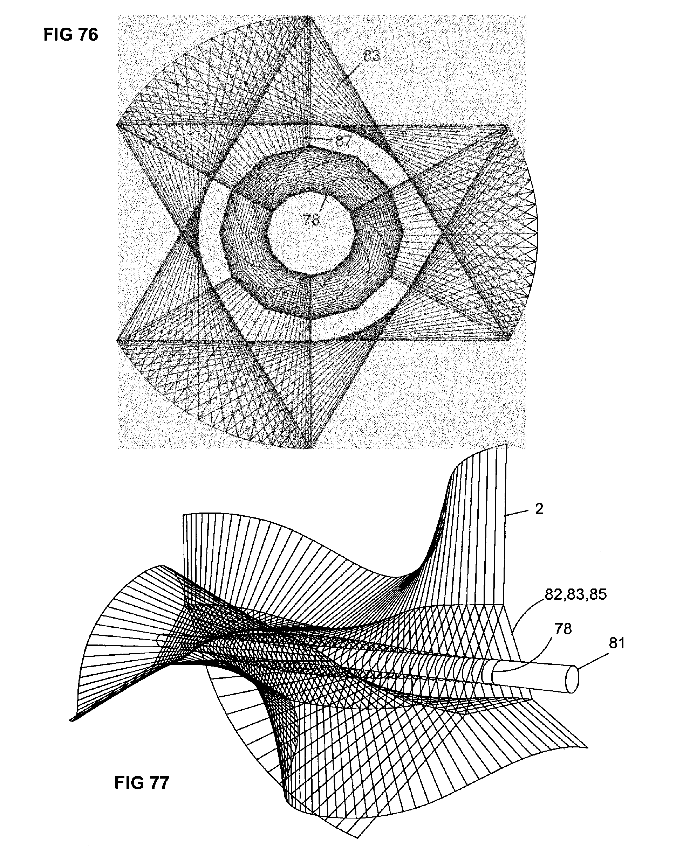

**FIG. 76** is a wire-frame illustration of a component of a spiral valve implementation looking down the center of the longitudinal axis of a length of second triangular core utilizing rigid radial arms;
**FIG. 77** illustrates a wire-frame perspective of assembled components of a spiral valve implementation showing a section equivalent to one wave bulge undulation;

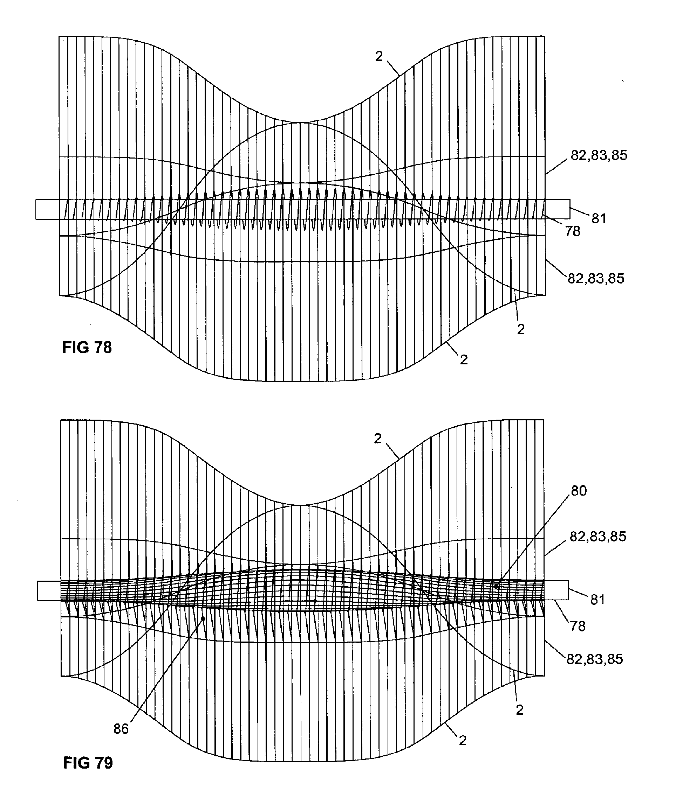

**FIG. 78** is a wire frame elevation of the same portion of spiral valve mechanism shown in **FIG. 77** viewed perpendicular to the longitudinal axis of the mechanism, showing certain elements of the mechanism in one implementation;
**FIG. 79** illustrates the elevation of **FIG. 78** with additional components in one implementation;

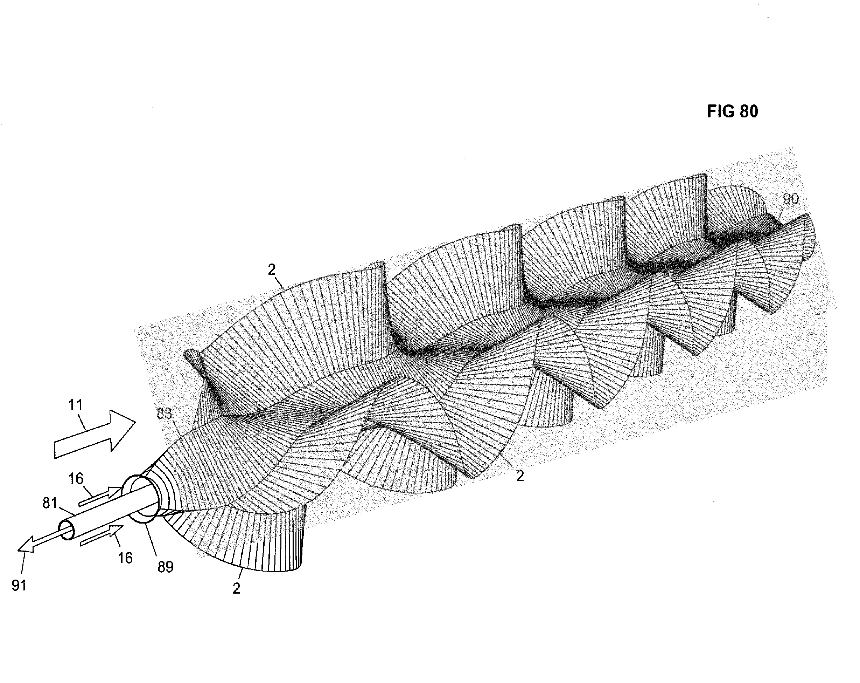

**FIG. 80** illustrates a spiral valve implementation mechanism in a position it may assume when secured in a stream of fluid in one embodiment;

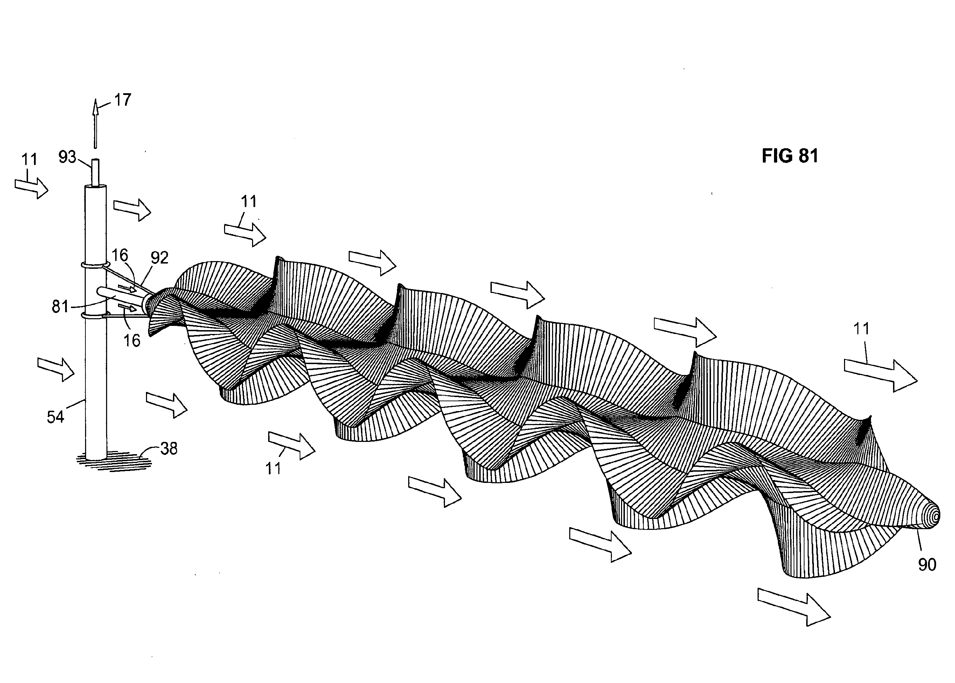

**FIG. 81** illustrates a spiral valve implementation mechanism secured in a stream of moving fluid in one embodiment;

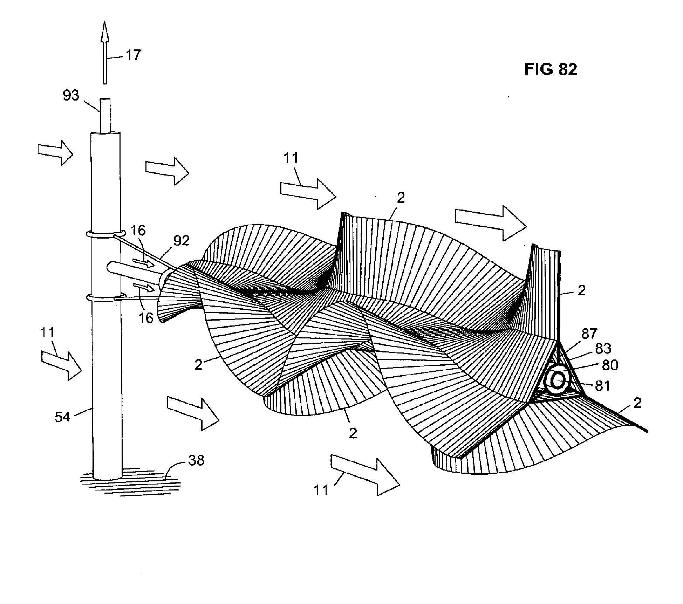

**FIG. 82** illustrates a cross-section cut through a spiral valve implementation mechanism secured in a flowing stream of fluid in one embodiment;

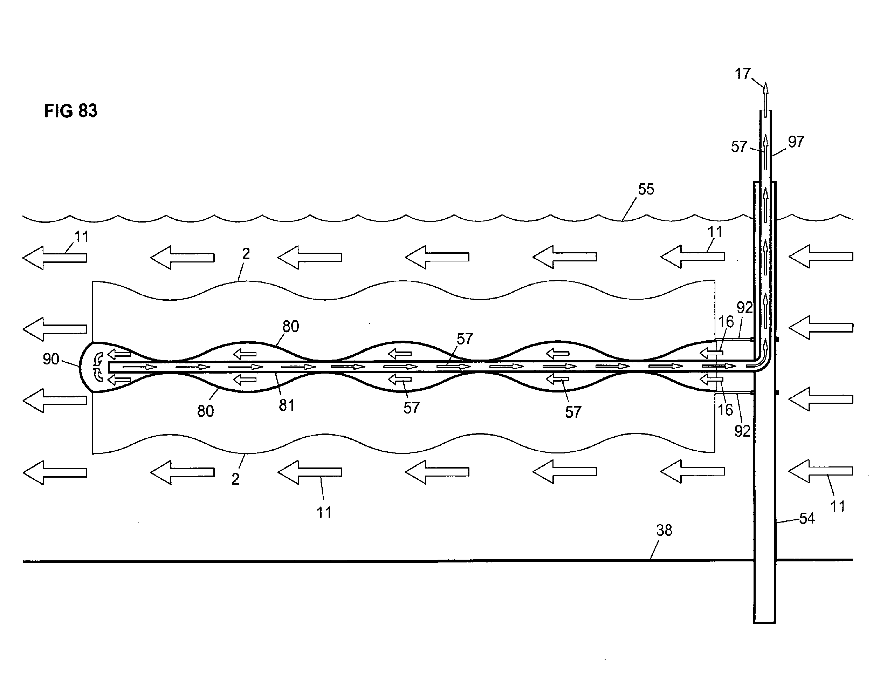

**FIG. 83** is a schematic illustration of a spiral valve implementation mechanism utilized as a pump showing the circulation of pumped water or fluid through the mechanism in one embodiment;

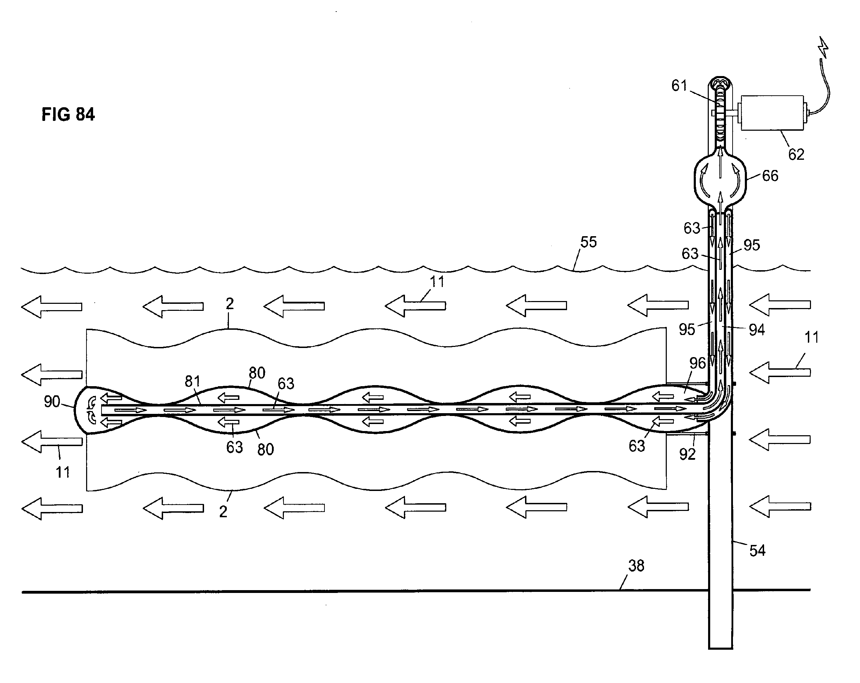

**FIG. 84** is a schematic illustration of a spiral valve implementation mechanism utilized as a generator showing the circulation of water or fluid in one embodiment;

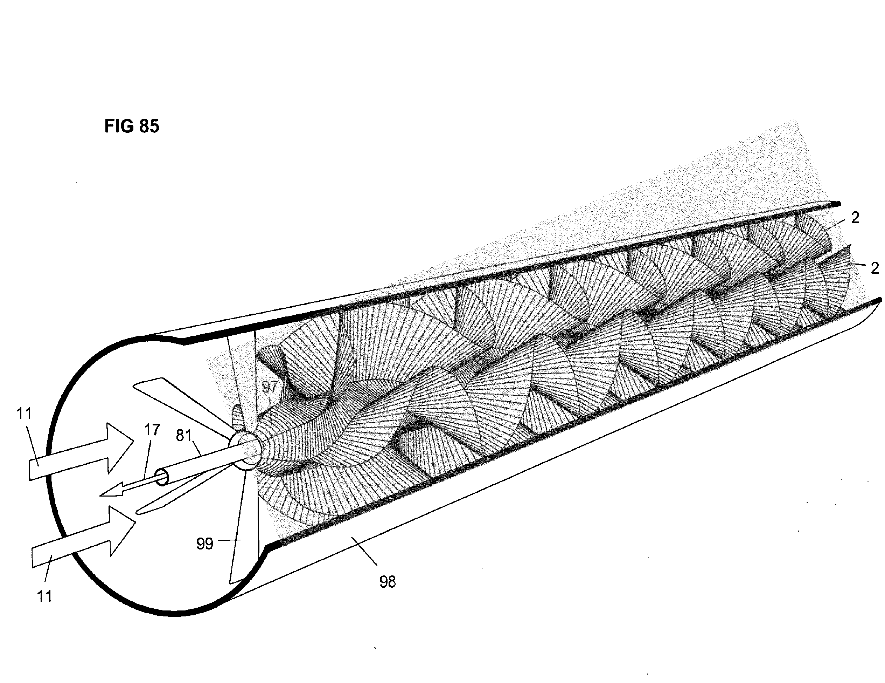

**FIG. 85** illustrates a spiral valve implementation mechanism utilizing six ribbons and placed within a tube of flowing fluid in one embodiment;

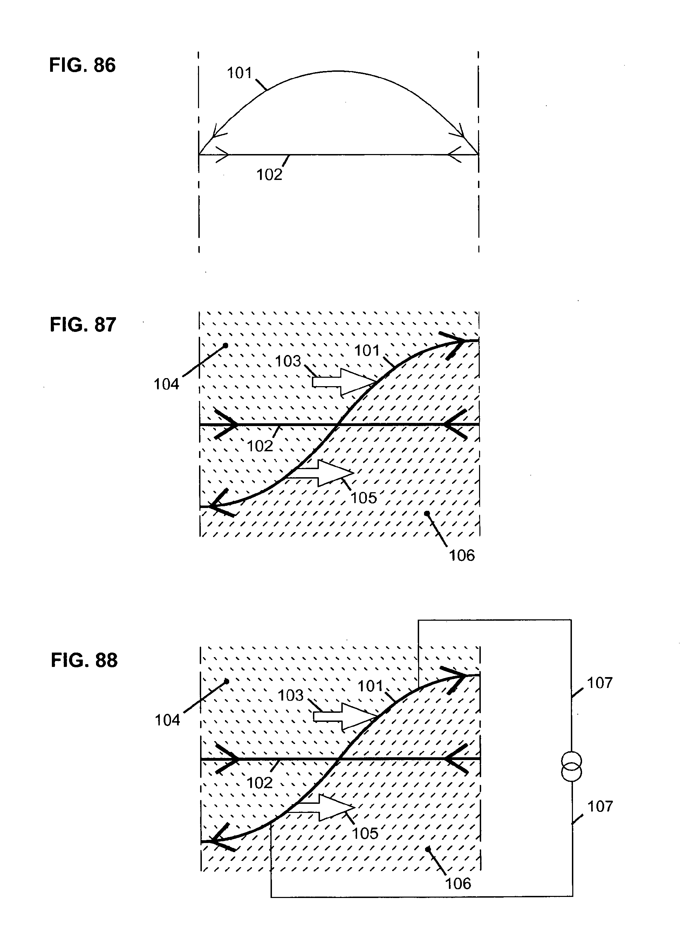

**FIG. 86** is a diagrammatic representation of the internal energy state of a deformation within a flexible material and the internal energy state of a deformation-retaining component in one implementation;
**FIG. 87** is a diagrammatic representation showing an external force exerted by a moving ambient fluid upon a deformed flexible material, transferring these forces onto a second fluid in one implementation;
**FIG. 88** illustrates how two or more electrodes may be connected to a deformed electroactive material in an implementation in which material strain is converted into electrical energy; and

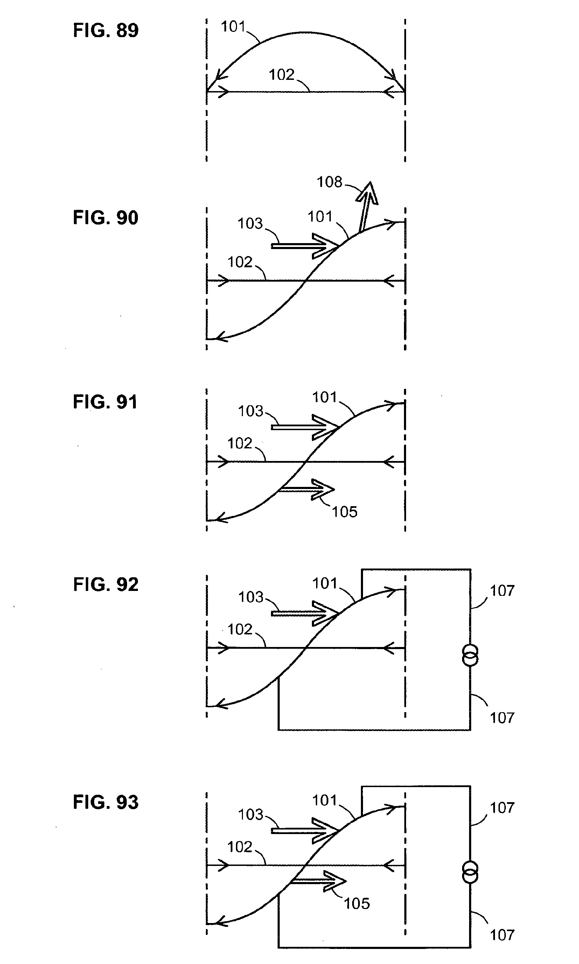

**FIGs. 89 - 93** diagrammatically illustrate several ways that the energy of a moving fluid may be harnessed via flexible components of mechanisms in various implementations.

### DETAILED DESCRIPTION

Pliant, or "compliant" elements or mechanisms extract energy from a moving body of water and use that energy to do work such as pump water from the moving body of water, or to pump water through a closed-loop system to power an electric generator. In the descriptions herein for various embodiments and/or implementations, numerous specific details are provided, such as examples of components, elements and/or mechanisms, to provide a thorough understanding of implementations described herein. However, it is to be understood that embodiments/implementations may be practiced without one or more of the specific details, through interchanging aspects of the illustrated implementations/embodiments, or with other apparatuses, systems, assemblies, methods, components, materials, parts, and/or the like.

At least three groups of pliant elements are described herein for illustrative purposes. The first group includes mechanisms incorporating double-layered fronds; the second group includes mechanisms comprised of single-layered fronds; and the third group includes mechanisms incorporating spiral valves.

### Double-Layered-Frond Mechanisms.

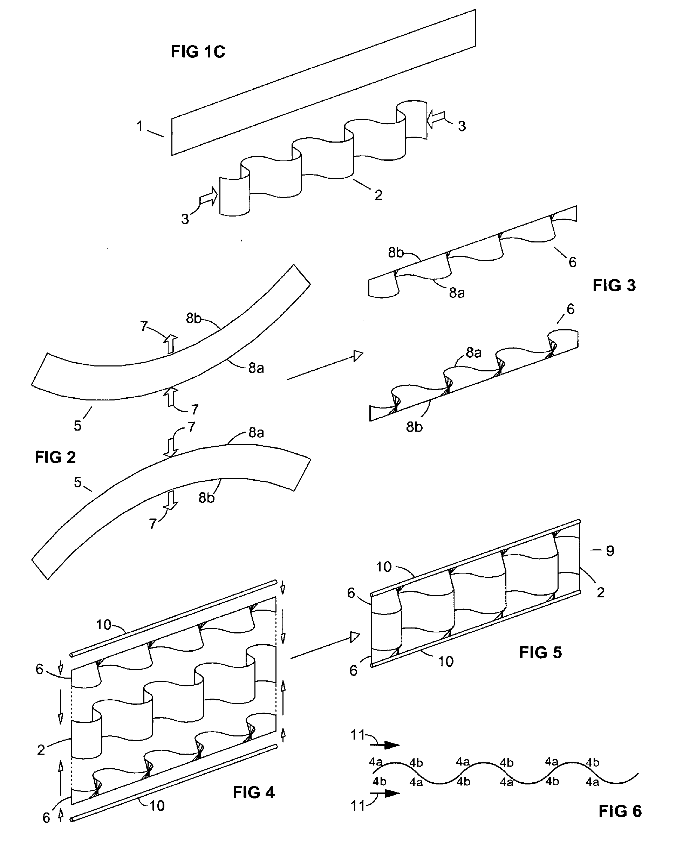

**FIG. 1C** illustrates aspects of creating a component common to several implementations described herein, namely the flexible deformed ribbon 2. The flexible ribbon is straight in its relaxed state 1. At least a first force 3 is applied to the ribbon in a manner so as to create one or a series of undulations along its length. The deformations are the result of the internal energy state of the material imposed by this first force 3.

**FIGs. 2-3** illustrate aspects of creating another component common to many of the implementations described herein, the crenated strip **6.** One method for creating a crenated strip with the described morphology and internal energy state is as follows: An arc-shaped piece of flexible or elastic sheet-like material **5** is deformed with at least a second force **7** until the outer arc of the strip **8a** and the inner arc of the strip **8b** become equal in length, at which point the inner arc **8b** of the strip is in tension, and the outer arc **8a** of the strip is in compression causing the strip to take on a hyperbolic geometry with a "crenated", or ruffled appearance.

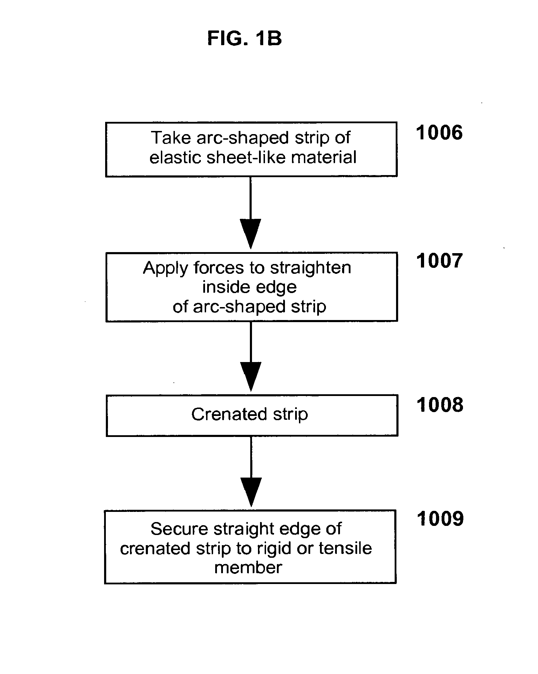

**FIG. 1B** illustrates one method for assembling a crenated strip in an implementation whereby an arc-shaped strip of elastic sheet-like material **1006** has forces applied to it **1007** so that the inside edge of the arch-shaped strip is straightened, creating a crenated strip **1008.** The straight edge of the crenated strip may be secured to a rigid or tensile member **1009** to lock-in the applied forces as potential energy.

A deformed ribbon **2** is fixed to two crenated strips **6** along its outer longitudinal edges creating a frond **9.** The first force **3,** which has been applied to the ribbon **1** and the second force **7,** which has been applied to the pre-strained crenated strips **5,** are held as potential energy within the frond **9** by the first restraining, or deformation-retention components **10,** such as rigid tubes or members **FIGs. 4-5****.** The frond **9** is now in its strained or "charged" state. The undulations are expressions of the internal energy state of the frond, so will remain as long as the first restraining components, or deformation-retention components **10** remains affixed to the frond **9.** Therefore, additional forces applied to the frond **9** can change the relative positions of the undulations within the frond **9** but not the presence of the undulations in some position within the frond **9.**

When the frond **9** is secured in a moving stream of fluid so that the frond is fixed in place and does not travel with the fluid, and so that the length of the frond **9** runs substantially parallel to the direction of moving fluid **11,** the pressure of the fluid adjacent to portions of the frond that face obliquely upstream **4a** will be greater than the pressure of the fluid adjacent to portions of the frond that face obliquely downstream **4b,** **FIG. 6****.** These pressure differentials cause the positions of the undulations to move along the length of the frond in the direction of the moving fluid **11.** The kinetic energy of the moving water is therefore transferred into the movement of undulations down along the frond **9.** Work is extracted from the movement of the undulations to power the mechanisms embodied herein. The number of undulations is a property of the way the material receives strains and the internal energy state of the frond **9.** Therefore, if the kinetic energy of the moving water **11** pushes an undulation off of one end of the frond **9,** another undulation will form at the opposite end of the frond **9.**

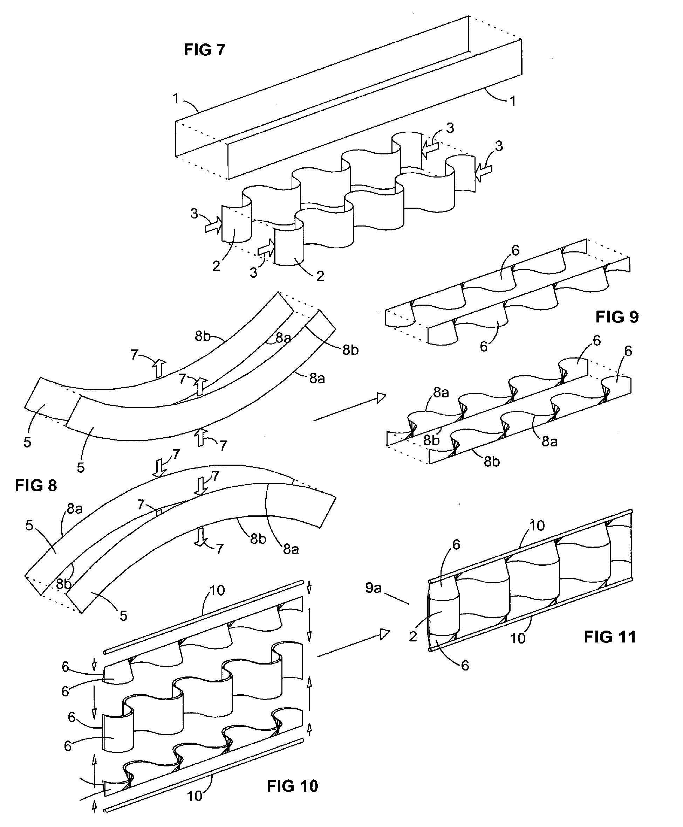

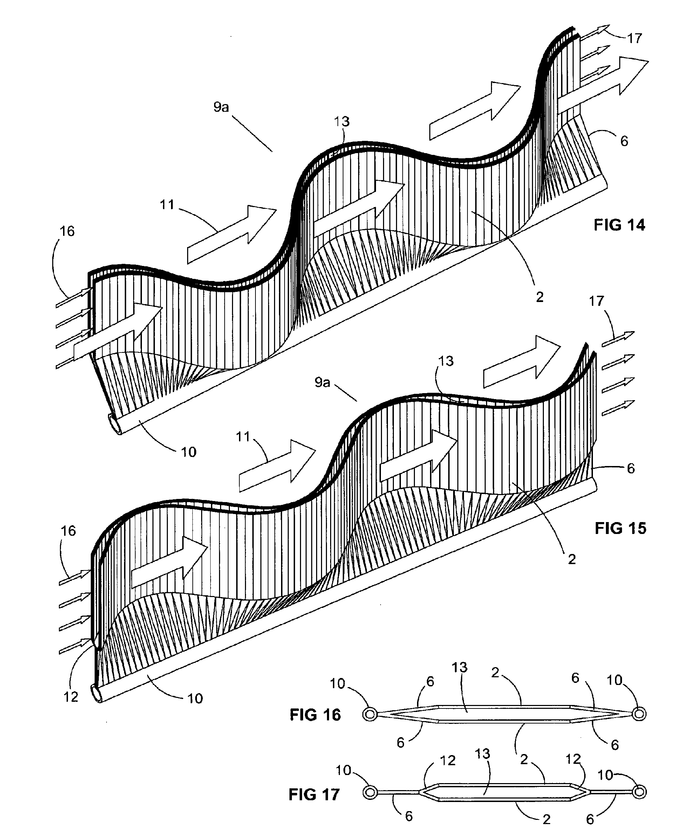

In several implementations, the flexible ribbon 2 may be configured as a double-layer, with the respective layers being connected to each other longitudinally but with interstitial space **2a** in between the two layers. In these double-layered frond **9a** implementations, the flexible ribbons **2** may be connected to each other indirectly via crenated strips **6** to the first restraining components **10**, or may be connected to each other directly via intermediate flexible connections **12** (**FIG. 17**), which in turn connect to a crenated strip **6,** which in turn is connected to the first restraining components **10.** **FIGs. 7-11** show how a double-layered frond **9a** may be formed and connected via crenated strips **6** to the first restraining component **10.**

In double-layered frond **9a** implementations where the flexible ribbons **2** are connected to each other via two crenated strips **6** to the first restraining components **10,** the two crenated strips may be separated from each other in a manner that matches the separation of the two flexible ribbons **2** and therefore make contact with each other as the two flexible ribbons **2** make contact, and separate as the two flexible ribbons **2** separate, being fixed to the two flexible ribbons **2** along their undulating longitudinal edges. Along their other, non-undulating edges the crenated strips **6** make contact with one another at their place of contact with the first restraining component **10,** or come close together so that the interstitial space between the crenated strips **6** is narrowest along their straight edges.

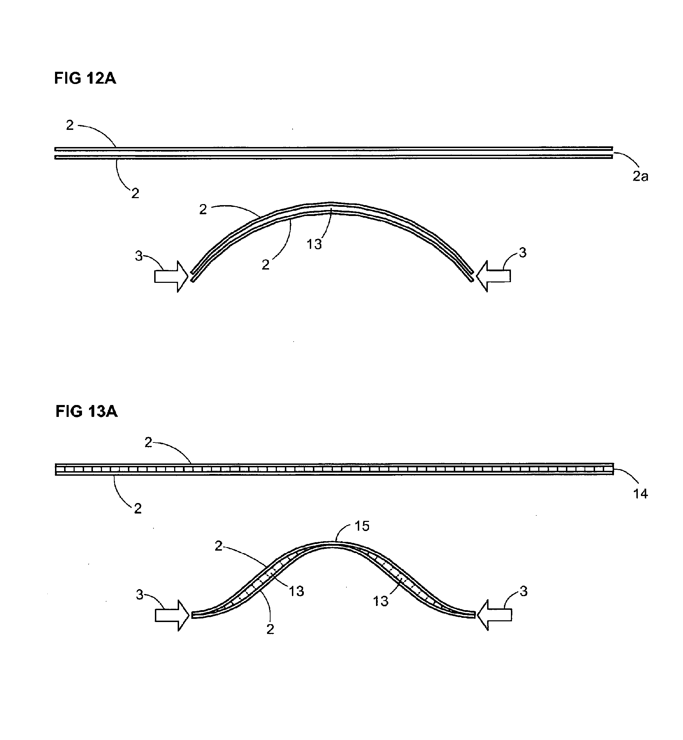

**FIGs. 12A** and **13A** illustrate aspects of how pockets **13** may be created in the interstitial space **2a** between the ribbons **2** of the double-layered frond **9a** implementations. In **FIG. 12A** a first force **3** is applied to two ribbons **2** of a flexible sheet-like material separated from each other by a small interstitial space **2a** causing them to bend and deform to accommodate this force **3.** The radius of the two curves formed by the two ribbons **2** are equal and one curve lies above the other, therefore the distance between the two ribbon **2** layers is greatest at the peak of the curve. Therefore, a pocket **13** is created in the interstitial space **2a** between the two ribbons **2.**

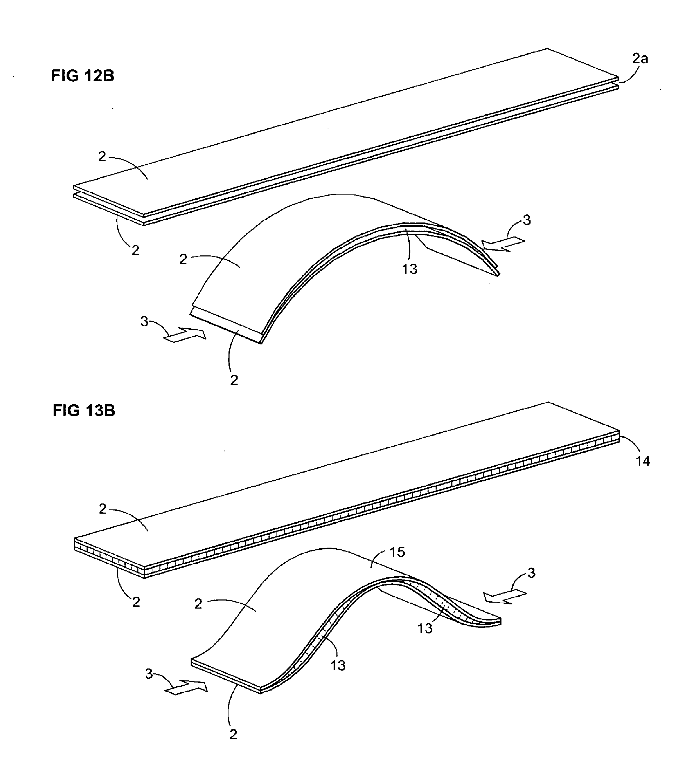

In **FIG. 13A** the interstitial space between the two ribbons **2** is occupied by an interstitial material or structure **14** fixed to the inside faces of both ribbons **2** and which can be readily compressed or stretched on the axis perpendicular to the plane of the ribbons 2. This configuration can be thought of as analogous to a three-layered laminated material in which the two outer layers are flexible perpendicular to the plane of the material but which can be stretched or compressed only minimally in the longitudinal direction parallel to the plane. In this analogy, the third, inner layer connecting the two outer layers could be a material like soft foam rubber. In this analogous configuration, the two outer layers, being bound to one another and unable to shift substantially in the longitudinal direction, will press closer together at the greatest peak of the curve **15,** and separate from one another one half way up the peak, creating pockets **13** at those locations. **FIGs. 12B** and **13B** are three dimensional representations of **FIGs. 12A** and **13A****.**

**FIG. 14** illustrates a longitudinal cross-section through a double-layered frond **9a** configured with a series of undulations with interstitial pockets **13** at the peak amplitude of the bulge deformations either side of the wave undulation's neutral axis, in accordance with the characteristics illustrated in **FIGs. 12A** and **12B****.** When secured in place, the current of water **11** passing across the double-layered ribbons **2** causes the bulge undulations to travel down along the double-layered ribbons **2** in the direction of the current, and therefore the positions of the interstitial pockets **13** will travel along the frond **9a** with the bulge undulations. If the interstitial space between the double-layered ribbons **2** at the upstream end of the frond is open to the water of the flowing current **11,** ambient water **16** may enter the interstitial space at the maximum wave amplitude during which the interstitial **2a** space is at its greatest. This water will become enclosed in an interstitial pocket **13** which will travel along the frond in the direction of the moving water current, and exit **17** at the downstream end of the double-layered frond **9a.**

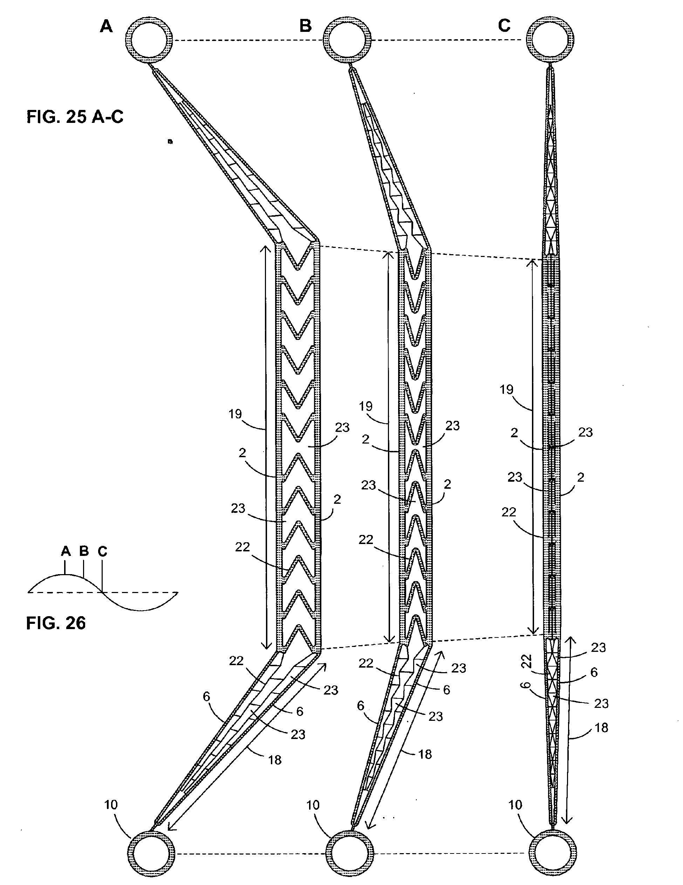

**FIG. 15** shows a longitudinal cross-section through a double-layered frond **9a** configured with a series of undulations with interstitial pockets **13** that occur at the neutral axis respectively, in accordance with the characteristics described above and illustrated in **FIGs. 13A** and **13B****.** (The interstitial structure **14,** which allows the passage of water is not shown in **FIG. 15** for purposes of graphic clarity, but will be described subsequently and is illustrated in **FIGs. 25A-C** **and** **FIGs. 30A-C**)**.** The forces of water in the moving current **11** move the interstitial pockets **13** along the frond as described above for the implementation illustrated in **FIG. 14****,** so the action of the implementations illustrated in **FIG. 14 and FIG. 15** are similar. A difference occurs in where during the cycle of wave undulations the pockets are created.

As above, each ribbon **2** of the double-layered frond **9a** may be attached directly along both longitudinal edges to crenated strips **6,** which themselves are attached to the first restraining component **10.** Such an arrangement is utilized in the double-layered frond 9a implementation with pockets at maximum amplitude as illustrated in **FIG. 14****.** A cross-section of this arrangement is shown in **FIG. 16****.** Alternatively, the longitudinal edge of each ribbon **2** of the double-layered frond **9a** may be connected to one another via intermediate flexible connections **12,** each of which is connect to a single crenated strip 6 which in turn connects to the first restraining component **10** as shown in **FIG. 17****.**

**FIGs. 16, 17** also illustrate how cross section cuts through double-layered frond implementations may take the form of elongate hexagons: In **FIG. 16** the sides of the hexagon are comprised of two ribbons **2** and four crenated strips **6.** In **FIG. 17** the sides of the hexagon are comprised of two ribbons **2** and intermediate flexible connections **12.**

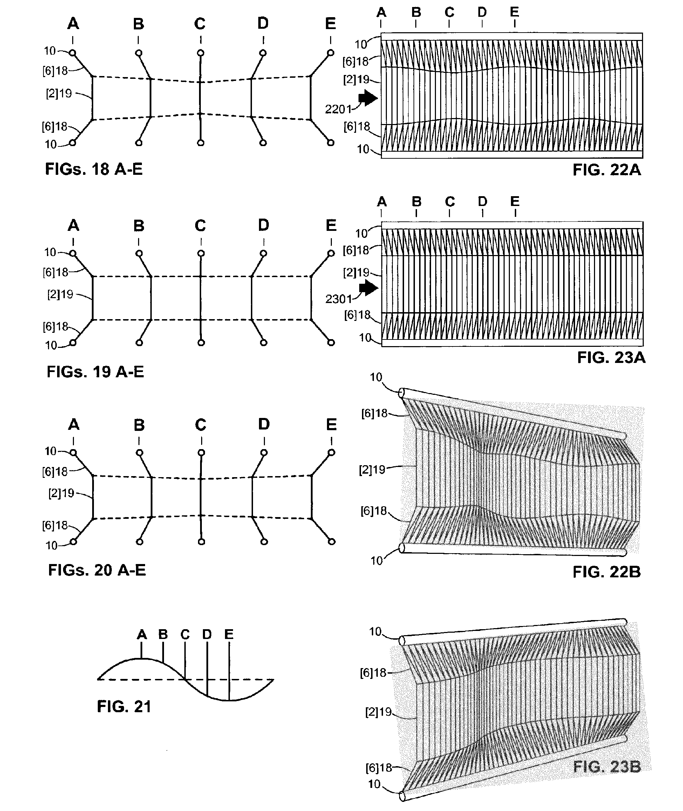

The behavior of the frond **9** or double-layered frond **9a** under operation is subtle and will vary depending on a number of factors including the relative elasticity of ribbons **2,** crenated strips **6** and, where present, the intermediate flexible connections **12** among other factors. **FIGs. 18A-E** and **FIGs.19A-E** are schematic diagrams showing five cross-section cuts viewed from a certain direction **2201** and **2301** respectively, of two slightly different frond **9** configurations during one half a cycle of operation, starting at maximum amplitude of the wave bulge, decreasing to zero amplitude, and increasing again to maximum amplitude on the opposite side of the neutral axis. **FIG. 21** illustrates where in the wave cycle, or bulge deformation cycle, these corresponding section cuts were taken for the two respective figures above. Dotted lines have been added to **FIGs. 18A-E** and **19A-E** connecting the same points in the successive section cuts to show how the locations of these points change during operation.

The summed cross-sectional dimension, which is the width of a ribbon **2** plus the width of two fronds **6,** varies during operation, being at its maximum at the maximum amplitude of deformation, and being at its minimum at the neutral axis of the wave, at which point the ribbons **2** and crenated strips **6** approximate a straight line in cross-section. (**FIGs. 18C** and **19C**). Several implementations are described herein which facilitate or accommodate this behavior.

**FIGs. 18A-E** illustrate an implementation with crenated strips 6 that are substantially fixed in their cross-sectional dimension **18.** Therefore, the cross-sectional dimension **19** of the ribbon **2** in this implementation must change during operation, and therefore must be substantially elastic in cross-sectional dimension. In double-layered frond **9a** implementations incorporating intermediate flexible connections **12,** the summed cross-sectional dimension **19** of the ribbons **2** plus intermediate flexible connections **12** must change during operation, being maximum in **FIG. 18A****,** E and minimum in **FIG. 18C****.**

**FIGs. 19A-E** show an implementation in which it is the crenated strips **6** that are substantially elastic in their cross-sectional dimension **18,** whereas the ribbons **2** are substantially fixed in their cross-sectional dimension **19.** Therefore the cross-sectional dimension **18** of the crenated strips **6** must change during operation. In double-layered frond **9a** implementations incorporating intermediate flexible connection **12** the cross-sectional dimension **18** of the fronds **6,** or the summed cross-sectional dimension of the fronds **6** plus intermediate flexible connections **12,** must change during operation, being maximum **in** **FIG. 19A****, E** and minimum in **FIG. 19C****.**

**FIGs. 20A-E** illustrate yet another configuration, whereby the cross-sectional dimensions **19** of the ribbon **2** and the cross-sectional dimension **18** of the crenated strips **6** both vary under operation, because both the ribbon **2** and crenated strip **6** are substantially elastic in their cross-sectional dimension. Therefore, both the cross-sectional dimension **19** of the ribbon **2** and cross-sectional dimensions **18** of the crenated strips **6** are at their shortest at the neutral axis of the wave deformations (**FIG.20C**). **FIG. 21** illustrates positions within the cycle of operation that the section cuts of **FIGs. 18A-E,** **FIGs. 19A-E** and **FIGs. 20A-E** are taken in one implementation.

The morphology taken by the implementation shown in **FIGs. 18A-E** is illustrated as an elevation in **FIG. 22A****.** The morphology of the implementation shown in **FIGs. 19A-E** is illustrated as an elevation in **FIG. 23A****.** A perspective view of the implementation illustrated in **FIG. 22A** is shown in **FIG. 22B****,** and a perspective view of the implementation illustrated in **FIG. 23A** is shown in **FIG. 23B****.**

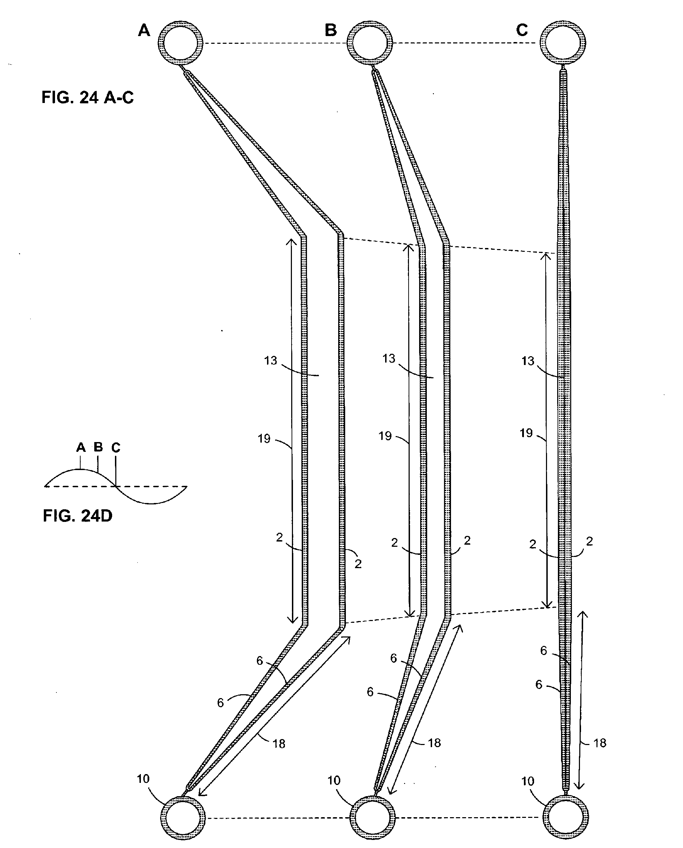

**FIGs. 24A-C** shows a cross-section through a double-layered frond **9a** implementation during one quarter of a cycle of operation, during which the bulge deformation changes from maximum to minimum amplitude of the wave bulge cycle, and the interstitial pocket **13** changes from maximum volume at maximum amplitude, to minimum volume at minimum amplitude. In the implementation shown in this illustration, both the ribbons **2** and crenated strips **6** are substantially elastic in their cross-sectional dimensions. (**FIGs. 20A-E**). The cross-sectional dimensions **18** of the crenated strips **6** and the cross-sectional dimensions **19** of the ribbons **2** decrease steadily between position of operation as shown in **FIGs. 24A** and position of operation as shown in **FIGs. 24C****.**

**FIG. 24D** indicates the locations within the wave bulge undulation cycle at which the section cuts of **FIGs. 24A-C** are taken.

**FIGs. 25A-C** show yet another double-layered frond **9a** implementation during one quarter of a cycle of operation, in which the interstitial space **2a** is occupied by an interstitial structure **14.** **FIG. 26** indicates the locations within the wave bulge undulation cycle at which the section cuts of **FIGs. 25A-C** are taken.

The components **22** of this interstitial structure **14** are comprised of a material enabling the components **22** to flex at their joints, allowing the interstitial structure as a whole to expand or contract perpendicular to the plane of the longitudinal axis of the frond 9a. The material comprising the components **22** is highly-elastic perpendicular to the longitudinal axis of the frond **9a.** The components **22** of this interstitial structure **14** are fixed to the internal faces of the crenated strips **6** and ribbons **2** and take the form of continuous extrusions, or channels **23,** running parallel to the longitudinal axis of the double-layered frond **9a.** Water **16** entering the upstream end of the double-layered frond **9a** passes along the channels **23** created by these extruded components **22.** Under operation, the cross-sectional dimension of these channels **23** expands and contracts perpendicular to the planes of the crenated strips **6** and ribbons **2.** The positions of the regions of expansion and contraction in the double-layered frond **9a** move parallel to the flow of the water current **11,** pushing water in the channels **23** down along the frond, where the water exits **17** the double-layered frond **9a** as shown in **FIG. 14****.**

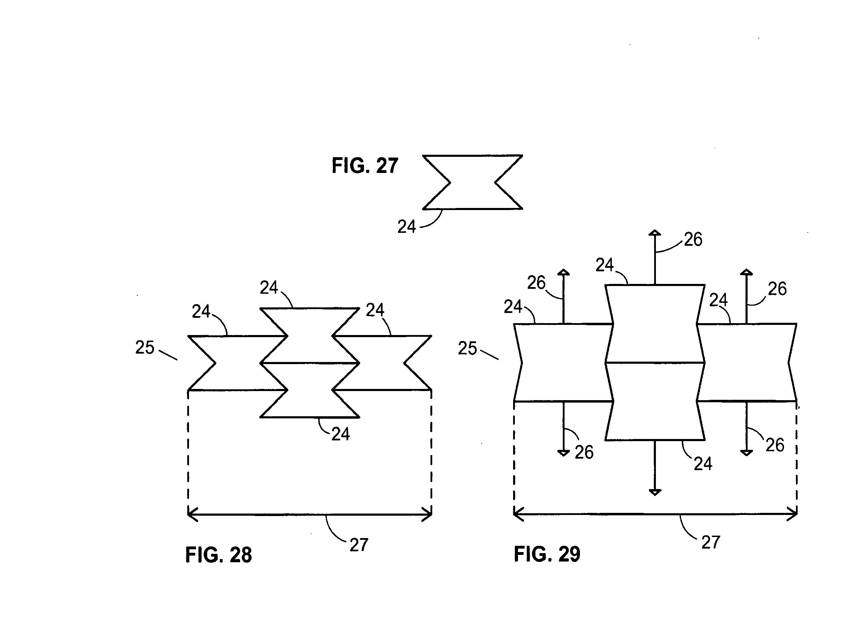

The action of the double-layered frond **9a** described above and illustrated in **FIGs. 25A-C** are facilitated in one implementation by utilizing characteristics of auxetic structures. Auxetic materials are materials with a negative Poisson's ratio, which is to say that when the material is stretched in one direction, it does not shrink in the other direction but instead expands in this other direction also. The term "auxetic" is applied to materials but can also apply to structures, one variation of which is the so-called Hoberman Sphere. The auxetic structures as employed in this implementation and shown in **FIGs. 25A-C** may utilize the inverted hexagon **24,** also referred to as the auxetic hexagon **FIG. 27****.** When multiple auxetic hexagons **24** are configured in a manner as shown in **FIG. 28****,** the resulting auxetic structure **25,** when stretched by a force **26** in one dimension will also stretch in another dimension **27,** FIG. 29.

The components **22** of the interstitial structure **14,** in combination with the fronds **6** and ribbons **2,** comprise the auxetic structures **25** of this implementation. These components **22** take on the form of auxetic structures **25** in cross section, whereby these structures are extruded longitudinally along the length of the double frond **9a** forming channels **23** down which water may flow. The inclusion of auxetic structures occupying the interstitial space **2a** facilitates the expansion and contraction of the interstitial pockets **13,** and thus the channels **23,** in the following manner: When the crenated strips 6 and double-layered ribbons **2** increase in cross-sectional dimension, their action will cause the auxetic structures **25,** which they are a part of, to increase in dimension perpendicular to the axis of the double-layered frond, thus expanding the space between the two ribbon **2** layers and two crenated strip **6** layers, and thus further facilitating the expansion of the pockets **13** of the interstitial space **2a.**

**FIGs. 30A-C** illustrates an implementation which combines characteristics of auxetic structures as illustrated in **FIGs. 25A-C** and **FIG. 28** with the configuration illustrated in **FIG. 19A-E** in which the ribbons **2** are substantially non-elastic in cross-sectional dimension and remain constant in cross-sectional dimension under operation. In this implementation, the interstitial space **2a** between the double-ribbons **2** is at its minimum where the bulge deformation reaches its maximum amplitude under operation, and the interstitial space **2a** between the double-ribbons **2** is at its maximum where the bulge deformation is at zero amplitude at the neutral axis of the bulge undulations under operation, as shown in **FIG. 15****.** The double ribbons **2** are of a flexible material but are minimally elastic in their cross-sectional dimension, which is to say that the material they are comprised of cannot be substantially stretched in plane, so that the ribbons **2** remain essentially constant in width as they flex and undulate perpendicular to their planes under operation. The crenated strips **6** are also minimally elastic, or non-stretchable, in their cross-sectional dimension.

For this implementation illustrated in **FIGs. 30A-C** the changes is summed cross-sectional dimension of the frond **9** under operation may be accommodated entirely by the intermediate flexible connections **12.** These intermediate flexible connections may be secured to the crenated strips **6** and ribbons **2** via rotational or flexible hinged joints **28, 29.** (Some implementations may incorporate flexible joints instead of or in addition to articulated joints throughout.) As the double ribbons **2** move further apart under operation, the ends of the intermediate flexible connections **12** which are attached **28** to the ribbons **2,** move apart also, rotating about the axis of the point **28** where they attach to the ribbons **2.** Simultaneously the ends of the intermediate flexible connection **12** that attach to the crenated strip **6** rotate about the axis of their point of attachment **29** to the crenated **strip 6.**

**FIG. 30D** indicates the locations within the wave undulation cycle at which the section cuts of **FIGs. 30A-C** are taken.

In addition to being connected to each other via the intermediate flexible connections **12,** the double ribbons **2** may also be connected to each other via a second interstitial structure **14a** taking the form of an extrusion that is connected longitudinally along the length of the double frond **9a,** and which takes the form in cross-section of an articulated structure that mimics the profile of the intermediate flexible connections **12.**

**FIGs. 31A-D** illustrate aspects of an implementation whereby the second interstitial structure will decrease in one direction when forces are exerted upon it in another direction: When a row of parallelograms **30** are connected to one another and held in tension along one edge **31** and a tensile force **32** is applied along the opposite edge in the opposite direction, they will collapse together and the space **33** defined by the enclosure of each parallelogram will decrease in volume.

**FIGs. 30A-C** **as** described above, showing a series of cross-sections through an implementation of a double-layered frond **9a,** utilize a double row of parallelograms, as viewed in cross-section. These parallelograms are extruded along the length of the frond as extruded torqued parallelepipeds. One side of each parallelogram is comprised of a portion **34** of the ribbon **2,** and each opposite side is comprised of a portion of one of two interstitial ribbons **35** which run through the central axis of the double-layered frond **9a.** The remaining two sides of each parallelogram are comprised of tertiary components **36** which attach to the inside face of one double-layered frond ribbon **2** and to one of the interstitial ribbons **35.** These interstitial ribbons **35** are connected along one edge **36a** to a crenated strip **6.** The crenated strips are held in maximum tension during the maximum bulge deformation under operation, and will therefore be exerting a lateral force **32** pulling the parallelograms into their collapsed position as demonstrated in **FIG. 31D****.** The effect of the tension in the crenated strips **6** therefore is to pull the two ribbons **2** together at maximum bulge amplitude. When tension in the crenated strips **6** is at its minimum the parallelograms of the interstitial structure **14** may be in their resting state, in which the two ribbons **2** of the double-layered frond **9a** are furthest apart.

**FIG. 32** shows a double-layered frond pump implementation secured in a flowing stream of water **11** via a second restraining component **37,** in the form of a post or rigid tube fixed to the bed of a river, tidal basin, or other immovable object **38.** The second restraining component **37** may be hinged about its longitudinal axis allowing it to swivel in the current so that the double-layered frond **9a** remains approximately aligned with the direction of the moving current. The second restraining component **37** is fixed to the first restraining components **10.** Under operation the upstream end of the double-layered frond **9a** is open to the ambient water **16** from the flowing stream of water when the upstream end of the double-layered frond **9a** is deformed so as to create a pocket 13 or expanded channels **23** in the interstitial space **2a** as described in the various implementations above. (FIGs. 14-15). As the pocket **13** moves down the length of the double-layered frond **9a,** the water in the pocket is transported along the length of the double-layered frond **9a** and exits the downstream-end of the double-layered frond 9a, where it enters a first reservoir **40** made of a flexible material, and then enters a first flexible tube **41,** which diverts the pumped water **17** to a desired destination.

**FIG. 33** illustrates yet another implementation, in which water collected in the flexible first reservoir **40** at the downstream end of the double-layered frond **9a** is transported along at least one first flexible conduit **42** to another second flexible conduit **43** that runs along the interior of one or both first restraining components **10,** where said first restraining components 10 are hollow. The water traveling along the second flexible conduit **43** connects to a second flexible tube **44** which diverts the water **17** to a desired destination.

**FIG. 34** illustrates yet another implementation in which water collected in the flexible first reservoir **40** is pumped along at least one fourth flexible tube **45** which is affixed to the surface of at least one of the flexible ribbons **2** and which passed along the surface of the ribbon **2** in the opposite direction to the flow of ambient water **11,** until it reaches the second restraining component **37,** which the fourth flexible tube **45** attaches to or penetrates into, after which it joins at least one fifth flexible tube **46,** through which exiting water **17** is transported to a desired destination.

**FIG. 35** illustrates two methods for assembling and implementing the double-layered frond mechanisms in some implementations. In one implementation, two ribbons of flexible sheet-like material **3501** have forces applied to create undulating deformations **3502.** The two ribbons are connected to four crenated strips **3504.** The mechanism is anchored in a moving fluid **3507** and energy is extracted or work performed by the mechanisms **3508.** In another implementation, two ribbons of a flexible sheet-like material **3501** have forces applied to create undulating deformations **3502.** The two ribbons are connected to two intermediate flexible connections **3505.** The intermediate flexible connections are connected to two crenated strips **3506.** The mechanism is anchored in a moving fluid **3507** and energy is extracted or work performed by the mechanisms **3508.**

In another implementation, electrical energy extraction from the deformed dynamic undulations in the ribbons, and other elements of the above mechanisms which flex in a periodic manner under operation, is with the utilization of an electroactive material which exhibits an electrical response to deformation. In such implementations of the mechanisms described, two or more electrodes may be utilized to extract electricity from the mechanisms.

### Single-Layered-Frond Mechanisms.

By way of example only, a second embodiment of mechanisms may utilize single-layered fronds **9.** Each frond **9** is comprised of a strained flexible ribbon **2** and strained crenated strips **6.** However, while in the double-layered frond implementations described above each ribbon is connected to at least two crenated strips **6,** one along each longitudinal edge of the ribbon **2,** in the single-layered frond implementations each ribbon **2** may be fixed to only one crenated strip **6** along one longitudinal edge of each ribbon **2.**

The crenated strip **6** attached to this one edge of the ribbon **2** is fixed to the first restraining component, or deformation-retention component **10.** The opposite edge of the ribbon **2** is fixed to a connecting strip **47** comprised of a sheet-like flexible material. In the process of fixing this flexible sheet to the ribbon **2** the flexible sheet is deformed subject to the first applied force **3** that is held as potential energy in the ribbon **2** and thereby takes on an undulating hyperbolic geometry similar to that of the crenated strip **6.** The ribbon **2,** crenated strip **6** and connecting strip **47** together comprise an asymmetric frond **48,** **FIG. 36A****.**

At least three asymmetric fronds **48** may attached to one another along the respective longitudinal edges of each other's connecting strips **47,** so that the connecting strips **47** of the three asymmetric fronds **48** take the form of a triangle in cross section where three asymmetric fronds **48** are utilized. The three asymmetric fronds **48** plus three first restraining components **10** together comprise an asymmetric frond unit **49,** **FIGs. 36B-C.** The three asymmetric fronds **48** share a common axis which runs substantially parallel to the direction of flowing water **11.** When the asymmetric frond unit **49** is secured in place in that flowing water **11** so as not to be carried away in the current, the positions of the undulations within the ribbons **2** will travel down along the lengths of the ribbons **2,** as described above (e.g. **FIG. 6**.)

The asymmetric frond unit **49** is configured so that each of its asymmetric fronds **48** has the same number of wave undulations of equal amplitude. In addition, under operation the relative wave positions of one asymmetric frond **48** are in-phase with the wave positions of the other two asymmetric fronds **48** in relation to the central axis of the frond unit **49.**

The asymmetric fronds **48** of the asymmetric frond unit **49** may be held together additionally by at least one peripheral connecting structure **50** which is affixed to all three asymmetric frond units **49** via the three first restraining components **10.**

In one implementation the crenated strip **6** and ribbon **2** of the asymmetric frond **48** may be composed of a flexible sheet-like material which allows deformation perpendicular to the plane of the sheet-like material. However, this material may also be substantially non-elastic in the direction parallel to the plane of this sheet-like material, just as a thin stainless steel ruler will readily flex perpendicular to its plane, but resist substantial stretching when either end is pulled in opposite directions. By contrast, the connecting strips **47** in this implementation are comprised of a material that is highly elastic in the direction parallel to the plane of the material.

**FIGs. 37A-E** schematically show a sequence of end-on views of an asymmetric frond unit during one half of a cycle of operation. The view is taken from a position downstream of the asymmetric frond unit **49** looking upstream at the end of the asymmetric frond unit **49.** As the wave undulations move either to one side or the other of their neutral wave amplitudes, the triangle formed by the three joined connecting strips **47** rotates partially clockwise or counter-clockwise about the longitudinal central axis of the asymmetric frond unit **49.** Because the sheet-like material comprising the crenated strips **6** and ribbons **2** is substantially non-elastic in the direction parallel to the plane of the material, and because the sheet-like material comprising the connecting strips **47** is highly elastic in the direction parallel to the plane of the material, under operation the diameter of this triangle expands and contracts in a periodic manner. This occurs because the summed length of crenated strip **6** plus ribbon **2** plus connecting strip **47** of each asymmetric frond **48** varies under operation, but only the highly elastic connecting strip **47** is able to change substantially in cross-sectional dimension. **FIGs. 38A-E** illustrate the sequence illustrated in **FIGs. 37A-E** but from a perspective view showing the entire asymmetric frond unit **49.**

**FIG. 39** illustrates the positions that the downstream-ends of the asymmetric fronds **48** take within the wave bulge undulation cycle as shown in **FIGs. 37A-E** and **FIGs. 38A-E.**

**FIGs. 37A-E** can also be regarded as being illustrative of a cross-sectional cut through a single point in the asymmetric frond unit **49** as viewed during one half cycle of operation, and correlating with moments in the wave cycle as illustrated in **FIG. 39****:** The cross-sectional lengths of the crenated strips **6** and ribbons **2** remain constant under operation, while the cross-section lengths of the connecting strips **47** vary under operation. The three connecting strips **47,** each attached along one longitudinal edge to both of the other two connecting strips **47,** together constitute a first triangular core **51** which takes on the form of an extruded hollow triangle which twists clockwise and counter-clockwise and which becomes narrower and wider in circumference **FIGs. 40-****41.** The effect of wave undulations passing down the length of the asymmetric fronds **48** under operation is translated into a twisting peristaltic motion down the length of the first triangular core **51,** which is where the pumping action of the single-layered frond implementations take place.

**FIG. 42** illustrates a series of highly elastic triangular membranes **52** which may be secured to the inside faces of the connecting strips **47** comprising the first triangular core **51.** Within each of the elastic triangular membranes **52** is a circular opening **53.** Under operation, as the first triangular core **51** twists, expands, and contract with the passing of undulations along the asymmetric fronds **48,** the elastic triangular membranes **52** expand and contract, and the circular openings **53** within these elastic triangular membranes **52** increase and decrease in radius.

**FIG. 43** illustrates a schematic section through the first pump implementation of the single-layered frond mechanisms. An asymmetric frond unit **49** is secured via its first restraining components **10** to a third restraining component **54** which takes the form of a hollow rigid post or rigid tube which itself is fixed to the bed of a river, tidal basin, or other immovable object **38.** The third restraining component **54** may be hinged about its longitudinal axis allowing the asymmetric frond unit **49** to swivel in the moving current so as to maintain a longitudinal axis parallel to the moving current. The third restraining component **54** is shown as protruding above the surface of the flowing water **55** for graphic clarity. The asymmetric frond unit **49** is secured to the third restraining component **54** via the first restraining components **10.** A fifth hollow tube **56** passes along the length of the interior of the first triangular core **51** and penetrates and is secured to the third restraining component **54.** Where the diameter of the circular openings **53** in the elastic triangular membranes **52** are at their minimum state, the inside edges of the circular openings **53** make contact with and apply pressure to the surface of the fifth hollow tube **56.** Ambient water **16** from the flowing current of water **11** is able to enter at the upstream-end of the asymmetric frond unit through the space between the first triangular core **51** and the fifth hollow tube **56,** when the diameter of the circular openings **53** in the elastic triangular membranes **52** are greater than their minimum dimension.

As the undulations in the triangular core **51** are moved along the asymmetric frond unit **49** under the forces of the flowing water **11,** a series of pockets containing collected ambient water **57** will also pass along the length of the interior of the triangular core. The circular openings **53,** after allowing the ambient water **16** to enter at the upstream end of the first triangular core **51** during their phase of greater diameter, will contract and eventually make contact with the fifth hollow tube **56,** creating a series of valves that direct water through the first triangular core **51** in the direction of the flowing current of water **11.**

**FIGs. 44A-C** further illustrate the behavior of the elastic triangular membranes **52** along the inside of a length of first triangular core **51** at three moments of time, correlating to three positions within one quarter of a wave bulge cycle of operation as defined in **FIG. 45****.** A cross-section view looking down the longitudinal axis of the first triangular core **51** is illustrated in **FIGs. 46A-D**, showing how the circular openings **53** in the triangular membranes **52** are offset-from, or dilated away from, and incrementally contract to make contact with, the fifth hollow tube **56** under operation. The corresponding positions within one quarter of a wave undulation cycle are illustrated in **FIG. 47****.**

When collected water **57** reaches the downstream end of the first triangular core **51,** it is prevented from traveling further in the same direction by a flexible cap **58** that closes-off the end of the first triangular core **51.** (**FIG. 43**). There is a space between the flexible cap **58** and the downstream-end of the fifth hollow tube **56,** and the fifth hollow tube **56** is open at its downstream-end. Therefore, captured water **57** that has reached the downstream end of the first triangular core **51** will enter the downstream-end of the fifth hollow tube **56** and will travel back along the inside of the fifth hollow tube **56** in a direction opposite to the ambient flowing water **11.** Because the fifth hollow tube **56** attaches to and enters into the third restraining component **54,** collected water **57** will pass into the third restraining component **54** and into a sixth hollow tube **59** or seventh hollow tube **60** inside the third restraining component **54** after which the water will exit **17** to be transported to a desired destination.

The relatively large volume of flowing water **11** passing over the asymmetric fronds **48** is able to harness kinetic energy which the asymmetric frond unit **49** concentrates onto a relatively small volume of collected water **57** within the triangular core **51,** creating significant water pressure within the first triangular core **51,** pumping water at a relatively low volume but at a relatively high pressure.

**FIG. 48** schematically illustrates another implementation in which the pumping action of the asymmetric frond unit **49** is utilized to generate electricity by powering a conventional turbine **61.** This first generator implementation is configured similar to the pump implementation as illustrated in **FIG. 43****.** This first generator implementation however, is not open at the upstream-end to ambient water, but incorporates a closed-loop system of circulating water **63,** with a turbine introduced into the loop to harness the kinetic energy of the water **63** moving through the closed-loop system.

In this first generator implementation, water **63** of the closed-loop system travels along the interior space of the first triangular core **51,** and then back along the fifth hollow tube **56,** and then into a sixth hollow tube **59,** from where it is forced through a turbine **61** which powers an electromagnetic generator **62.** Upon exiting the turbine **61,** the water **63** passes into at least one eighth hollow tube **64** which feeds into a second flexible reservoir **65** which adjoins the upstream-end of the triangular core **51,** whereupon the water **63** is passed once again along the first triangular core **51** and the process repeats. A pressure-equalization device **66** may be inserted into the closed loop system immediately preceding the turbine **61** in order to convert the pulsing nature of the pumping action into a more constant flow. Another implementation utilizes a holding tank up into which water is pumped after which it falls via gravity in an even flow, powering a generator as it flows. In a closed-loop implementation, fluids other than water may be enclosed and circulated.

The second single-layered-frond pump implementation is similar in design and operation to the first single-layered-frond pump implementation, but with the addition of an elastic core tube **67** which runs continuously through the circular openings **53** of the elastic triangular membranes **52** and which is bonded circumferentially about each circular opening **53** of each elastic triangular membrane **52,** as shown in the exploded perspective views of **FIGs. 49-50****.** As the triangular membranes **52** expand and contract in diameter under operation, the diameter of the elastic core tube **67,** being bonded to the circular openings **53,** also expands and contracts. When a triangular membrane 52 is at its minimum diameter, the elastic core tube **67** is "pinched" against the fifth hollow tube 56. When a triangular membrane **52** is at its maximum diameter there is an interstitial space between the fifth hollow tube **56** and the elastic core tube **67.** Under operation, pockets of collected water **57** between the fifth hollow tube **56** and elastic core tube **67** are pushed along inside the triangular core **51,** as illustrated schematically in **FIG. 51****.**

**FIG. 52** is a schematic illustration of a second generator implementation. This implementation is identical to the first generator implementation as illustrated in **FIG. 48** with the notable additional element of the elastic core tube **67** which is described above and illustrated in **FIGs. 49-50****.**

**FIGs. 53A-C** illustrate a first triangular core **51** which incorporates a series of triangular plates **68** which create a triangular valve mechanism for directing the flow of water pumped through the first triangular core **51.** In both pumping and generating implementations utilizing these triangular plates **68,** the fifth hollow tube **56** directing pumped water back in the direction opposite to the flow of ambient water **11** is absent. **FIG. 56****.** Pumped water reaching the downstream-end of the first triangular core **51** instead enters a third flexible reservoir **69** and at least one fifth flexible tube **70** that runs across the edge of the end of at least one ribbon **2** and then enters at least one of the first restraining components, where said restraining component is a hollow rigid tube **10a.** Water passes along this rigid hollow tube **10a** which connects to and penetrates the third restraining component **54,** whereupon the rigid hollow tube **10a** joins a ninth hollow tube **73** through which water passes and exits the mechanism **17** to a desired destination.

**FIG. 56** schematically illustrates this third single-layered-frond pump implementation, utilizing the triangular plate **68** valve mechanism as described above and in more detail below:

This triangular plate valve mechanism is comprised of triangular plates **68,** each of which takes the form of an isosceles triangle. **FIGs. 54A-D** and **FIGs. 55A-D.** The two equal edges **71** of each triangular plate **68** are reinforced with a rigid member or material which keeps the lengths of these two equal edges **71** constant under operation. The third edge **72** of the triangular plate **68** is elastic and fixed to the plane of one flexible connecting strip **47** in a line that runs perpendicular to the longitudinal axis of the plane of the flexible strip **47.** As described above, the cross-sectional dimension of the flexible strip increases and decreases as the triangle defined by a cross-section through the first triangular core **51** expands and contracts under operation. The third edge **72** of the triangular plate **68** must therefore become longer or shorter under operation. Because one end of each of the two equal edges **71** is fixed to either end of the third edge **72,** the angle formed by the juncture of the two equal edges **71** changes under operation, growing more acute as the third edge **72** shrinks. The angle of the triangular plates **68** relative of the flexible strips **47** to which they are attached, and the fixed lengths of the two equal edges **71** are calibrated so that when the first triangular core **51** is at its smallest diameter, the equal edges **71** of three triangular plates **68** meet each other, and therefore form a closed valve.

**FIGs. 54A-D** show the configuration of three triangular plates viewed facing down the longitudinal axis of the first triangular core **51,** as the diameter of the triangular core **51** goes from greatest to smallest, illustrating how the two equal edges **71** of each of the triangular plates **68** come together under operation. **FIGs. 55A-D** show the same sequence but viewed perpendicular to the longitudinal axis of the first triangular core **51.**

**FIG. 57** schematically illustrates the third single-layered frond generator implementation which is similar in design and operation to the third single-layered-frond pump implementation illustrated in **FIG. 56****.** In this third generator implementation however, the upstream-end of the triangular core is not open to ambient water: Instead, water circulates through the mechanism in a closed-loop system, with a turbine introduced into the loop to harness the kinetic energy of the circulating water of the closed-loop system. Enclosed water **63** pumped along the interior of the first triangular core **51** exits at the down-stream end into a third flexible reservoir **69** from where it is diverted along at least one at least one fifth flexible tube **70** that runs across the edge of the end of at least one ribbon **2** and then enters at least one of the first restraining components, where said restraining component is a hollow rigid tube **10a.** Water passes along this rigid hollow tube **10a** which connects to and penetrates the third restraining component **54,** whereupon the rigid hollow tube **10a** joins a tenth hollow tube **74.** The pumped water **63** is then pushed through a turbine **61** powering an electromagnetic generator **62.** Water exiting the turbine passes along an eleventh hollow tube **75** which empties into a fourth flexible reservoir **76** which in turn empties into the first triangular core **51** and the cycle is repeated indefinitely. A pressure-equalization device **66** may be inserted into the closed loop system immediately preceding the turbine **61** in order to convert the pulsing pumping action into a more constant flow.

**FIG. 58A** illustrates a fourth single-layered-frond pump implementation, which is similar in design and operation to the third single-layered-frond pump implementation illustrated in **FIG. 56****.** However, the fourth single-layered-frond pump implementation differs with the introduction of inner connecting strips **77** which run parallel to the longitudinal axis of the first triangular core **51.** The equal edges **71** of the elastic triangular plates **68** are each connected to one of the inner connecting strips **77**. The inner connecting strips **77**, being themselves connected to each other along their longitudinal lengths, form a tube taking the cross-sectional form of a rotationally-symmetrical inverted hexagon. **FIG. 58B** is a view of the first triangular core **51** looking down its longitudinal axis, illustrating how the inner connecting strips **77** form an inverted hexagonal tube affixed to the triangular plates **68**.

**FIG. 59A** illustrates a fourth single-layered frond generator implementation, which is similar to the third generator implementation illustrated in **FIG. 57**, except for the addition in this fourth generator implementation of the inner connecting strips **77** and tube as described above.

**FIG. 59B** illustrates a method for assembling and implementing single-layered frond mechanisms in one embodiment. A ribbon of flexible sheet-like material **5901** has forces applied to create one or more planar deformations/undulations in the ribbon **5902**. One undulating edge of the ribbon is fixed to the undulating edge of a crenated strip **5903**. One edge of the ribbon is fixed to one edge of the connecting strip **5904**, creating an asymmetric frond **5905**. Three asymmetric fronds may be adjoined via three connecting strips **5906**, creating an asymmetric frond unit **5907**. The asymmetric frond unit may be connected to peripheral connecting structure **5908**. The asymmetric frond unit may be anchored in a moving fluid **5909**, energy is extracted from, or work is performed by, the asymmetric frond unit **5910**.

In another implementation, electrical energy extraction from the deformed dynamic undulations in the ribbons and other elements of the above mechanisms which flex in a periodic manner under operation, is with the utilization of an electroactive material or a material which exhibits an electrical response to material strain. In such implementations of the mechanisms described, two or more electrodes may be utilized to extract electricity from the electroactive material utilized in the mechanisms.

### Spiral Valve Mechanisms

Implementations of a third category may be characterized as spiral valve mechanisms. Like the first two categories described above, the spiral valve implementations utilize flexible ribbons 2. However, they do not utilize single-layered fronds 9 or double-layered fronds 9a as discussed above. Like the first two categories, the spiral valve mechanisms are comprised primarily of flexible or elastic components to which forces are applied during the fabrication so as to deform these components, after which restraining components, or deformation-retention components are utilized to maintain these components in their deformed, strained states. The internal energy states of the materials from which the components are fabricated are therefore held in strained, non-relaxed states in which they hold the forces applied during fabrication as potential energy. The potential-energy-holding components of the first two categories are primarily the flexible ribbons **2** and crenated strips **6** and elastic connecting strips **47**. The potential-energy-holding components of the spiral valve mechanisms are primarily flexible ribbons **2** and spirals or coils **78**, the latter comprised of a flexible material such as hardened steel, rubber, plastic or any other suitable elastic material with very low plasticity.

For the purpose of clarity, the spiral valve implementation described in detail within the disclosures of this patent utilize three connected flexible ribbons **2**, **FIGs. 60A-B**. However, spiral valve implementations utilizing fewer or more connected ribbons are all incorporated into this invention. The utilization of three connected flexible ribbons **2** leads to the use of the world "triangle" when describing components of the implementation but in implementations utilizing, for example, four connected flexible ribbons **2**, the word "square" would substitutes the word "triangle" and in an implementation utilizing six connected flexible ribbons **2,** the word "hexagon" would substitute the word "triangle" and so on.

A spiral or coil winds either clockwise or counterclockwise, depending on viewpoint. An elastic coil may be stretched along its axis by a force exerted along that axis. An elastic coil may also be made to increase in diameter by securing one end of the coil and twisting it in one direction and it may be made to decrease in radius by securing the same end and twisting in the opposite direction, respectively tightening (winding) or loosening (unwinding) the coil.

In the spiral valve implementation, one or more undulating ribbons **2** as described above are secured in multiple locations along a coil **78** perpendicular to the circumference of the coil **78**. Applying a third force **79** to the connected flexible ribbon **2** perpendicular to the radius of the coil **78** will cause the coil to tighten or loosen, and therefore to increase or decrease in radius, at the location of the applied third force **79**, so long as the ends of the coil **78** are themselves prevented from rotating **FIG. 62**. In the spiral valve implementation, the sequential and coordinated tightening (winding) of the coil **78**, or loosening (unwinding) of the coil directed by the movement of undulations along the connected flexible ribbons **2** produces pumping action as described and explained below.

There are a variety of different methods for the fabrication of the spiral valve in different implementations **FIG. 61**, whereby potential energy is locked into components of the mechanism so that said components maintain a strained, deformed state prior to operation, and maintain permutations of this strained, deformed state under operation. In a first such method a first force is applied to a flexible ribbon **6101** so as to create a series of undulations in said ribbon **6102** as described above and illustrated previously in **F1G.1**. The flexible ribbon **2** is then held in its deformed state **6103** and attached along one of its longitudinal edges along the length of an elastic coil **78** while said elastic coil **78** with uniform diameter is in a relaxed resting state, **6104**, **6105**. Upon removal of the first force **3** the flexible ribbon 2 will "want" to return to its straight, un-strained state and in so doing will exert forces upon the elastic coil **6106, 6107.** With correct calibration of the relative stiffness and elasticity of the ribbon **2** and coil **78** respectively, some of the potential energy of the stressed flexible ribbon **2** will be transferred into the elastic coil **78.** As a consequence, the flexible ribbon **2** will straighten partially, **6108** and the elastic coil **78** will become tightened (wound) and loosen (unwound) along its length in a pattern that corresponds to areas of the flexible ribbon **6109** whose wave bulge amplitude falls above or below its neutral axis. The mechanism is now "charged", maintaining all of the potential energy from the first applied force but in a balanced state, whereby wound and unwound portions of the elastic coil **78** and strains within the flexible **2** ribbon are in balance, **6110.** **FIG. 63****.** Illustrates that the elastic coil **78** may be wound or un-wound by applied forces **79.**

In the second of at least two methods for the fabrication of the spiral valve implementations, (FIG. 61) a series of third forces 79 are applied perpendicular to the radius of the elastic coil **6111** in alternating rotational directions, causing portions of the coil to rotate partially clockwise or counter-clockwise, and therefore causing portions of the coil to tighten (wind) or loosen (unwind) away from their relaxed state **6112.** With the coil held in this state **6113** at least one flexible ribbon **6114** is attached along one of its longitudinal edges to the coil the coil **6115.** Upon removal of the third force **6116** the coil will "want" to return to its pre-strained state and will therefore transfer some of its potential energy into the attached flexible ribbon **6117,** deforming the ribbon which will take on an undulating appearance **6119** in a pattern corresponding to regions of the elastic coil that have been wound or unwound **6118** by the application of the third force. With correct calibration of the relative stiffness and elasticity of the ribbon **2** and coil **78** respectively, the elastic coil's **78** "desire" to return to a uniform diameter is balanced by the flexible ribbon's **2** "desire" to be in its straight and unstrained state. The mechanism is now "charged" with the third force **79** maintained as internal potential energy within the mechanism **6120.** This internal energy is expressed as a series of wave undulations within the flexible ribbon **2** corresponding to a series of bulges along the elastic coil **78,** where said bulges are demonstrations of regions of the coil **78** that are wound or unwound, which is to say of regions of greater or lesser elastic coil **78** diameter.

When such a mechanism is secured within a stream of moving water 11 or other fluid so that the longitudinal axis of the mechanism is parallel to the direction of the stream of water **11,** forces acting upon the ribbons **2** (**FIG. 6**) will cause the positions of maximum and minimum wave bulge amplitude to move along the ribbon **2** in the direction of the moving fluid **11.** Because the wave undulations in the ribbon **2** correspond with bulges in the diameter of the elastic coil **78,** the bulges in the elastic coil **78** will also move along the mechanism in the direction of the moving fluid **11.**

A second elastic core tube **80,** **FIG. 68****,** is affixed to the inside or outside of the elastic coil **78** continuously along the length of the coil **78** so that the diameter of this second elastic core tube **80** increases and decreases with the varying diameter of the elastic coil **78.** An eleventh hollow tube **81,** **FIG. 66****,** runs continuously within the second elastic core tube **80** so that pockets are formed between the second elastic core tube **80** and the eleventh hollow tube **81** when the diameter of the second elastic core tube **80** is greater than its minimum. Where the elastic coil **78** and second elastic core tube **80** are at their minimum diameter, they form a seal against the surface of the eleventh hollow tube **81.**

Multiple flexible ribbons **2** may be incorporated, each attached directly or indirectly along one longitudinal edge to the elastic coil **78.** A multiple of three are chosen and described herein to demonstrate and illustrate a method by which multiply-attached ribbon implementations are constructed and how they operate.

**FIG. 64** illustrates a schematic cross-section through a spiral valve mechanism utilizing three ribbons **2** connected as above and each **120** rotational degrees apart. The ribbons **2** are connected to each other continuously via second flexible connecting strips **82,** which together constitute the second triangular core **83.** The second triangular core **83** is similar to the first triangular core **51** of the single-layered frond implementations described above. However, in spiral valve implementations, the connections between the ribbons **2** and corners of the second triangular core **83** are rigid moment connections **83a.** This is different from the attachment of ribbons **2** to the first triangular core **51** where the connection is highly flexible or articulated. Therefore, the intersecting angles **84** of the ribbons **2** and second triangular cores **83** remain constant under operation in the spiral valve implementations **FIG. 65A-E,** whereas the intersecting angle of the ribbons 2 and first triangular cores **51** vary under operation in the single-layered frond implementations as illustrated in **FIG. 37A-E.**

Another spiral valve mechanism implementation utilizes stiffening members **85** affixed to or incorporated into the material comprising the ribbons **2** and second flexible connecting strips **82,** **FIGs. 69, 70, 71****,** **74****.** etc. These stiffening members limit the materials ability to bend in one direction, namely in the direction perpendicular to a cross-section through the material, but do not limit the material's ability to bend perpendicular to a longitudinal-section through the material.

The stiffening members **85** of the ribbons **2** and second flexible connecting strips **82** are connected to each other, taking on an arrangement identical to a cross-section cut through the spiral vale mechanism as shown in **FIG. 64****.** Internal radial fins or arms **86** connect the second triangular core **83** to the elastic coil **78** and second elastic core tube **80.** Therefore the forces in the moving water **11** acting on the ribbons **2** and on the second triangular core **83** are transferred onto the elastic coil **78** via these internal radial fins or arms **86.** The terms internal radial fins OR arms **86** are used because these components may be continuous strips multiply connecting the second triangular core **83** and elastic coil **78,** or they may be a series of arms multiply connected the second triangular core **83** and elastic coil **78.**

**FIGs. 66, 67, 68, 69,70** illustrate together aspects of the eleventh hollow tube **81,** elastic coil **78,** second elastic core tube **80,** internal radial fins or arms **86,** and second triangular core **83** respectively. **FIG. 71** illustrates these five components assembled together along with the ribbons **2.** This assembly corresponds to a section of spiral valve mechanism during one cycle of a wave bulge operation.

There are various arrangements and configurations for attaching the internal radial fins or arms **86** to the elastic coil **78.**

One implementation is illustrated in **FIGs. 72A-C** whereby the internal radial fins or arms **86** are attached to the elastic coil **78** at points tangent to the circumference of the elastic coil **78.** As the second triangular core **83** rotates it exerts a force through the internal radial fins or arms **86** which tightens, or winds-up the elastic coil **78,** reducing its diameter and closing the space between the second elastic core tube **80** and the eleventh hollow tube **81,** expelling any collected water within that space. In this arrangement, the points of attachment between the second triangular core **83** and the internal radial fins or arms **86** are flexible or articulated.

Another implementation is illustrated in **FIGs. 73A-C** whereby rigid radial arms **87** are secured via rigid connections to the stiffening members **85** of the second triangular core **83.** These rigid radial arms **87** are inserted into rigid radial tubes **88** which are in turn secured via rigid connections to the elastic coil **78** at points perpendicular to the circumference of the elastic coil **78.** As the second triangular core **83** rotates it exerts a force through the rigid radial arms **87** to the rigid radial tubes **88** which tighten, or wind-up the elastic coil **78,** reducing its diameter and closing the space between the second elastic core tube **80** and the eleventh hollow tube **81,** expelling any collected water within that space. The rigid radial arms **87** slide within the rigid radial tubes **88** under operation. To reduce total friction in the mechanism caused by the rigid radial arms **87** sliding within the rigid radial tubes **88,** **FIGs. 73A-C** show only one rigid radial arm **87** per section of second triangular core **83** reinforced with stiffening members **85,** but any number can be incorporated. In some implementations, there may also be less than one rigid radial **87** arm per wind of the coil **78** so that the rigid radial arm **87** attaches to the coil **78** every two or more winds of the coil **78.**

**FIG. 74** is a wire-frame illustration of a portion of second triangular core **83** utilizing radial fins or arms **86** to connect the second triangular core **83** to the elastic coil **78.** For graphic clarity, only one radial fin or arm **86** is shown connecting to the elastic coil **78** from one corner of the second triangular core **83,** but more may be connected. In some implementations, there may also be less than one radial **86** arm per wind of the coil **78** so that the radial arm **86** attaches to the coil **78** every two or more winds of the coil **78.**

**FIG. 75** is a wire-frame illustration looking down the center of the longitudinal axis of a length of second triangular core **83** utilizing radial fins or arms **86** connecting the second triangular core **83** to the elastic coil **78.**

**FIG. 76** **is** a wire-frame illustration looking down the center of the longitudinal axis of a length of second triangular core utilizing rigid radial arms **87.**

**FIG. 77** is a wire-frame perspective showing a section of a spiral valve mechanism equivalent to one wave bulge undulation, showing the arrangements and relative positions of the components described above, but omitting certain elements for graphic clarity. **FIG. 78** is a wire frame elevation of the same portion of spiral valve mechanism viewed perpendicular to the longitudinal axis of the mechanism, showing certain elements of the mechanism. **FIG. 79** is the same elevation as **FIG. 78** but with the inclusion of additional elements.

**FIG. 80** shows a spiral valve mechanism in the position it assumes when secured in a stream of water **11.** The upstream end of the second triangular core **83** has an open flange or collar **89** allowing ambient water to enter **16.** This water is enclosed in a series of pockets that travel down along the inside of the second elastic core tube **80,** under forces exerted upon the ribbons **2** from the stream of water **11,** which in turn act upon the elastic coil **78** and second elastic core tube **80** as described above. Water reaching the end of the second elastic core tube **80** enters a fifth elastic reservoir **90,** after which it is forced back up the eleventh hollow tube **81** in the direction opposite to the flowing water **11.**

**FIG. 81** illustrates how a spiral valve mechanism is secured in a stream of moving water **11** via a third restraining component **54** which is secured to the bed of a river, tidal basin or other stationary object **38.** The third restraining component **54** may be hinged about its longitudinal axis allowing the spiral coil mechanism to swivel in the moving current so as to maintain a longitudinal axis parallel to the moving current. The second triangular core **83** is fastened via cables **92** or other members to the third restraining component **54** and the eleventh hollow tube **81** is fastened to the third restraining component **54.** Water pumped along the eleventh hollow tube **81** enters the third restraining component **54** where upon it connects to a terminating tube **93** and exiting water **17** is diverted to a desired destination. **FIG. 82** shows a cross-section cut through a spiral coil implementation secured in a flowing stream of water **17.**

**FIG. 83** is a schematic illustration of a spiral valve implementation utilized as a pump showing the circulation of pumped water **57** through the mechanism.

**FIG. 84** is a schematic illustration of a spiral valve implementation utilized as a generator showing the circulation of water. In the generator implementation, the pumped water is held within a closed-loop system within the mechanism. The pumped water **63** in the eleventh hollow **81** tube travels upstream relative to the flowing ambient water **11,** then into a twelfth hollow tube **94,** from where it is forced through a turbine **61** which powers an electromagnetic generator **62.** Upon exiting the turbine **61,** the water **63** passes into at least one thirteenth hollow tube **95** which feeds into a sixth flexible reservoir **96** which opens into the second elastic core tube **80** whereupon the water **63** is pumped in pockets down along the space between the second elastic core tube **80** and the eleventh hollow tube **81,** into the fifth flexible reservoir **90** and then back up interior of the eleventh hollow tube **81.** and the process repeats indefinitely. A pressure-equalization device **66** may be inserted into the closed loop system immediately preceding the turbine **61** in order to convert the pulsing nature of the pumping action into a more constant flow.

As stated above, more than three or less than three flexible ribbons **2** can be utilized in the spiral valve mechanisms. One such implementation is illustrated in **FIG. 85** and which utilizes six ribbons **2.** In implementations utilizing six ribbons **2,** the component corresponding to the second triangular core **83** above will become a first hexagonal core **97** comprised of second flexible connecting strips **82** and stiffening members **85.**

**FIG. 85** also illustrates an arrangement whereby the spiral valve mechanism is harnessed in a conduit or pipe **98** through which a current of water **11** flows due to a pressure differential between one end of the pipe **98** and the other. The spiral mechanism is secured to this pipe **98** via fastening blades **99** across which the current of water flows, acting upon the ribbons **2** and forcing water through the second elastic core tube **80** and back through the eleventh tube **81** where it exits the mechanism **17** as described in the implementations above. The kinetic energy in the relatively large volume of water moving through the pipe **98** creates significant pressure on the relatively low volume of water inside the mechanism, creating a low speed, high pressure pump which can also be utilized to power an electromagnetic turbine in a similar manner as described in the implementations above. The advantage of placing the spiral valve mechanism in a pipe through which water is moving due to a pressure gradient is an enhanced interaction between the water current and the mechanism, as the water has no alternative path to travel other than through the array of ribbons **2.**

In another implementation, electrical energy extraction from the deformed dynamic undulations in the ribbons and other elements of the above mechanisms which flex in a periodic manner under operation, is with the utilization of electroactive material or material which exhibits an electrical response to material strain. In such implementations of the mechanisms described, two or more electrodes may be utilized to extract electricity from electroactive elements of the mechanisms.

In implementations of the spiral valve mechanisms, the elastic coil **78** may be comprised of a helical electroactive material, or incorporate electroactive material. In such implementations the energy from the moving fluid **11** may be harnessed first by the ribbons **12** as mechanical energy and then transferred mechanically to the elastic coil **78** where the tightening and loosening of the elastic coil **78** generates electricity from the electroactive material of the coil **78.** The mechanisms described above include facilities for capturing and transferring forces. For implementations utilizing electroactive materials, the mechanisms may transfer these captured forces to the electroactive material.

In yet another implementation, captured fluid may be pumped and/or may power an electromagnetic generator while at the same time the electroactive elements of the mechanisms generate electricity.

**FIG. 86** **is** a diagrammatic representation, in one implementation, of the internal energy state of a single deformation **101** within the flexible material and the internal energy state of a deformation-retaining component **102** which retains the deformation in the material. The deformation **101** in the material is in overall compression, and the deformation-retaining component **102** is in tension.

**FIG. 87** is a diagrammatic representation, in one implementation, showing an external force **103** exerted by a moving ambient fluid **104** upon the deformed flexible material **101.** The forces of the moving first fluid **104** are transferred **105** to a second fluid **106** as the position of the deformation moves.

The first fluid **104** of **FIG. 87** may, in one implementation, be considered the energy-transmitting fluid and may correlate, for example, with elements in these disclosures referred to variously as flowing current **11,** flowing water **11,** flowing stream of water **11** and ambient water **11.**

The flexible deformed material **101** of **FIG. 87** may, in one implementation, be considered the energy-transferring component and may correlate, for example, with elements in these disclosures referred to variously as flexible ribbons **2**, crenated strips **6**, channels **23**, connecting strips **47**, triangular core **51**, elastic core **67**, elastic core tube **80**, flexible connecting strips **82** and second triangular core **93**. While in some implementations, the first fluid **104** may not make direct contact with this partial list of energy-transferring components, the forces of the first fluid **103** may be transferred **105** directly and/or indirectly to the second fluid **106** by one or more of these energy-transferring components.

The second fluid **106** of **FIG. 87** may, in one implementation, be considered the energy-receiving fluid and may correlate, for example, with elements in these disclosures referred to variously as water in pockets **13,** collected water **57,** collected ambient water **57,** circulating water **63,** enclosed water **63** and pumped water **63,** for example. The energy-receiving fluid **106** is transported to a desired location in some implementations. In other implementations electrical energy may be harnessed from the energy of the energy-receiving fluid **106** by an electromagnetic generator or other output device, as described previously herein.

Another way to harness electrical energy from components of the mechanisms described herein is through the utilization of a flexible material which exhibits an electrical response to a material strain. Such a material would comprise or be incorporated into flexible elements which undergo dynamic deformation (e.g., periodically) in the mechanisms described. **FIG. 88** illustrates how, in one implementation, two or more electrodes **107** may be connected to the deformed flexible material **101,** where this material exhibits an electrical response to material strain caused by the forces **103** in the first fluid **104** or forces **105** in second fluid **106.** Examples of such materials include, but are not limited to: electroactive polymers (EAPs) which may exhibit electrostrostrictive, electrostatic, piezoelectric, and/or pyroelectric responses to electrical or mechanical fields, as well as ionic EAPs, shape memory alloys, nano-wires, and/or the like.

**FIGs. 89 - 93** diagrammatically illustrate several ways that the energy of a moving fluid may be harnessed via flexible components of mechanisms described in this invention.

**FIG. 89** is a diagrammatic representation, in one implementation, of the internal energy state of a single deformation **101** within the flexible material and the internal energy state of a deformation-retaining component **102** which retains the deformation in the material. The deformation **101** in the material is in overall compression, and the deformation-retaining component **102** is in tension.

**FIG. 90** illustrates one method of energy extraction whereby the force **103** in a first fluid acting upon a deformed material **101** causes the deformation to move and transfer energy via mechanical action **108** to a mechanical mechanism to which the deformed material **101** is coupled. An example of such a mechanical mechanism may be, but is not limited to, an axle coupled to an electromagnetic generator or other output device.

**FIG. 91** illustrates another method of energy extraction whereby the force **103** in a first fluid acting upon the deformed material **101** is transferred **105** to a second flowing fluid. The energy of the first fluid **103** may be utilized to pump the second fluid, or the energy of the second fluid **105** may be used to power an electromagnetic generator.

**FIG. 92** illustrates another method of energy extraction whereby the force **103** in a first fluid acting upon a deformed material **101** causes the deformation to move thereby creating strains within the deformed material, where said material exhibits an electrical response to a material strain. Two or more electrodes **107** may extract electricity from the mechanism generated by strains within said material.

**FIG. 93** illustrates another possible method of energy extraction whereby the force **103** in a first fluid acting upon the deformed material **101** is transferred **105** to a second flowing fluid. The energy of the first fluid **103** may be utilized to pump the second fluid, or the energy of the second fluid **105** may be used to power an electromagnetic generator. In addition, the force **103** in the first fluid and second fluid **105** acting upon the deformed material **101** creates strains within the deformed material, where said material exhibits an electrical response to a material strain. Two or more electrodes **107** may extract additional electricity from the mechanism. In this method of energy extraction, energy is extracted both from strains created in a deformed electroactive material **101** as described above, as well as from energy **105** of the second flowing fluid. Such a dual-energy-harnessing mechanism anticipates novel materials in which elastic deformation does not create heat within the material but instead creates electrical energy, so that the energy lost to heat in the arrangement illustrated in **FIG. 91** is instead converted to electrical energy.

## Claims

1. A fluid transporting apparatus for transporting a first fluid, comprising:
a polygonal tube (51) comprised of flexible walls (47) enclosing a fluid passage and having a polygonal cross-section, with a plurality of tube edges corresponding to corners of the polygonal cross-section;
a plurality of flexible ribbons (2), each having a first longitudinal edge, a second longitudinal edge, and a contact surface,
wherein each of the plurality of flexible ribbons is connected along the first longitudinal edge to one of the plurality of tube edges, and
wherein the contact surface projects transverse to a longitudinal axis of each of the plurality of flexible ribbons (2);
at least one deformation retaining component (10) connected to one of the longitudinal edges of at least one of the plurality of flexible ribbons (2);
wherein, in use, at least one base member (54) is fixed with respect to a flowing second fluid and connected to the at least one deformation retaining component (10); and
wherein the longitudinal axis of each of the plurality of flexible ribbons (2) is oriented substantially parallel to a primary flow direction of the flowing second fluid, and the contact surface being disposed in contact with the flowing second fluid such that dynamic undulations of the plurality of flexible ribbons (2) caused by the flowing second fluid (11) impart forces via the flexible walls of the polygonal tube to a first fluid inside the fluid passage to transport the first fluid along a longitudinal axis of the fluid passage.

2. The apparatus of claim 1, wherein
a volume defined by the flexible walls of the polygonal tube comprises the fluid passage;
the at least one deformation retaining component comprises a plurality of crenated strips, each having a straight longitudinal edge and an undulating longitudinal edge, wherein each of the plurality of crenated strips is connected along the undulating longitudinal edge to the second longitudinal edge of one of the plurality of flexible ribbons; and
the at least one base member comprises a plurality of base members fixed with respect to the flowing second fluid and connected to the straight longitudinal edge of each of the plurality of crenated strips.

3. The apparatus of claim 2, wherein the fluid passage is in operative communication with a space containing the flowing second fluid, and wherein the first fluid and the second fluid are the same.

4. The apparatus of claim 2, further comprising:
a plurality of flexible membranes situated within the polygonal tube and connected to the flexible walls of the polygonal tube,
wherein each of the plurality of flexible membranes has an opening, and
wherein each of the plurality of flexible membranes and each opening expand and contract in response to the forces imparted by the dynamic undulations of the plurality of flexible ribbons.

5. The apparatus of claim 2, further comprising:
at least one interior tube situated within and substantially concentric with the polygonal tube.

6. The apparatus of claim 7, wherein
the fluid passage is closed to a space containing the second fluid at a closed end in the downstream direction of the flowing second fluid,
the at least one interior tube is at least one hollow interior tube,
the at least one hollow interior tube is open to the fluid passage at an open end of the hollow interior tube in the downstream direction of the flowing second fluid, and
wherein the first fluid enters the hollow interior tube from the fluid passage at the open end and is transported through the hollow interior tube in a direction opposite to the primary flow direction of the flowing second fluid.

7. The apparatus of claim 2, further comprising:
a turbine, disposed in operative communication with the fluid passage; and
an electromagnetic generator operatively connected to the turbine;
wherein transport of the first fluid excites the turbine to generate electricity via the electromagnetic generator.

8. The apparatus of claim 2, further comprising:
at least one directional valve situated within the polygonal tube and connected to the flexible walls of the polygonal tube, wherein the directional valve directs the transport of the first fluid in a preferred direction along the fluid passage.

9. The apparatus of claim 1, further comprising:
an elastic core tube enclosed by the polygonal tube and defining by its internal volume a fluid passage;
wherein the at least one deformation retaining component comprises an elastic coil connected by at least two points along its length to the elastic core tube, connected by at least two points along its length to the polygonal tube, and having sequential alternating tightening and loosening to impart to the elastic core tube a longitudinally variable cross-sectional area;
wherein each of the plurality of flexible ribbons have persistent undulations therein that correlates with the sequential alternating tightening and loosening of the elastic coil; and
wherein dynamic undulations of the plurality of flexible ribbons caused by the flowing second fluid impart forces via the elastic coil and elastic core tube to a first fluid inside the fluid passage within the elastic core tube to transport the first fluid along a longitudinal axis of the fluid passage.

10. The apparatus of claim 9, wherein at least one point of an inner surface of at least one of the flexible walls of the polygonal tube is connected to the elastic coil.

11. The apparatus of claim 9, wherein the elastic coil is comprised of an electroactive material.

12. A fluid transporting apparatus for transporting a first fluid (16), comprising:
a polygonal tube having flexible walls with adjacent pairs of the flexible walls (2) rotatably connected to each other, wherein the polygonal tube (13) defines a first fluid passage (13) with an elongate hexagonal cross section and has first and second wider walls (2) opposite from each other and first to fourth remaining narrower walls (6) than the two wider walls (2),
wherein, in use, each of the two wider walls (2) have external contact surfaces disposed in contact with a flowing second fluid (11) and formed with persistent spatial undulations in a direction parallel to a longitudinal axis of the polygonal tube (13), which is oriented substantially parallel to a primary flow direction of the second flowing fluid (11), the persistent spatial undulations having substantially similar undulatory periods and phases and having a projection transverse to the longitudinal axis of the polygonal tube;
at least one deformation retaining component (10) maintains the persistent spatial undulations therein;
at least one base member (37) is fixed with respect to the flowing second fluid (16) and is connected to the at least one deformation retaining component (10); and
wherein dynamic undulations of the two wider walls (2) caused by action of the flowing second fluid (11) on the external contact surfaces imparts a force to a first fluid (16) in the first fluid passage (13) to transport the first fluid (16) along a direction substantially parallel to the first longitudinal axis of the polygonal tube.

13. The apparatus of claim 12 wherein:
the first wider wall (2) is formed of a first flexible ribbon (2), the second wider wall (2) is formed of a second flexible ribbon, the first and second flexible ribbons (2) each comprising a first and second longitudinal edge and a contact surface, and wherein each of the first to fourth narrower walls (6) are formed of a crenated strip (6) having a straight longitudinal edge (8b) and an undulating longitudinal edge (8a),
wherein the undulating longitudinal edge (8a) of the first crenated strip (6) is connected to the first longitudinal edge of the first flexible ribbon (2),
wherein the undulating edge of the second crenated strip is connected to the first longitudinal edge of the second flexible ribbon (2),
wherein the straight longitudinal edge (8b) of the second crenated strip (6) is connected to the straight longitudinal edge (8b) of the first crenated strip (6),
wherein the undulating longitudinal edge (8a) of the third crenated strip (6) is connected to the second longitudinal edge of the first flexible ribbon (2),
wherein the undulating edge (8a) of the fourth crenated strip (6) is connected to the second longitudinal edge 8b of the second flexible ribbon, and
wherein the straight longitudinal edge 8b of the fourth crenated strip (6) is connected to the straight longitudinal edge 8b of the third crenated strip (6);
the base member (37) is connected to the first crenated strip (6); and
the first and second flexible ribbons and the first to fourth crenated strips define the first fluid passage.

14. The apparatus of claim 13, further comprising:
a plurality of continuous elastic extrusions connected to a first undulating inner contact surface of the first flexible ribbon opposite the first undulating outer contact surface and connected to a second undulating inner contact surface of the second flexible ribbon opposite the second undulating outer contact surface, and defining a plurality of channels occupied by the first fluid.

15. The apparatus of claim 14, wherein a cross-section of at least one of the plurality of channels is auxetic.

## Patentansprüche

1. Fluidtransportvorrichtung zum Transportieren eines ersten Fluids, die Folgendes aufweist:
ein polygonales Rohr (51), aufweisend flexible Wände (47), die einen Fluiddurchgang umschließen und einen polygonalen Querschnitt haben, wobei eine Vielzahl von Leitungskanten Ecken des polygonalen Querschnitts entspricht;
eine Vielzahl flexibler Bänder (2), die jeweils eine erste Kante in Längsrichtung, eine zweite Kante in Längsrichtung und eine Kontaktfläche aufweisen,
wobei jedes der Vielzahl flexibler Bänder entlang der ersten Längskante mit einer der Vielzahl von Leitungskanten verbunden ist, und
wobei die Kontaktfläche in Querrichtung zu einer Längsachse jedes der Vielzahl von flexiblen Bändern (2) herausragt;
wobei mindestens ein Verformung eindämmendes Bauteil (10) mit einer der Längskanten aus mindestens einem der Vielzahl flexibler Bänder (2) verbunden ist;
wobei beim Gebrauch mindestens ein Basiselement (54) bezüglich eines strömenden zweiten Fluids fixiert und mit dem mindestens einen Verformung eindämmenden Bauteil (10) verbunden ist; und
wobei die Längsachse jedes der Vielzahl flexibler Bänder (2) im Wesentlichen parallel zu einer primären Strömungsrichtung des strömenden zweiten Fluids ausgerichtet ist und die Kontaktfläche in Kontakt mit dem strömenden zweiten Fluid angeordnet ist, sodass durch das strömende zweite Fluid (11) verursachte dynamische Wellenbewegungen der Vielzahl flexibler Bänder (2) über die flexiblen Wände des polygonalen Rohrs Kräfte auf ein erstes Fluid im Inneren des Fluiddurchgangs übertragen, um das erste Fluid entlang einer Längsachse des Fluiddurchgangs zu transportieren.

2. Vorrichtung nach Anspruch 1, wobei
ein durch die flexiblen Wände des polygonalen Rohrs definiertes Volumen den Fluiddurchgang aufweist;
das mindestens eine Verformung eindämmende Bauteil eine Vielzahl von eingekerbten Streifen aufweist, wobei jeder dieser Streifen eine gerade Längskante und eine gewellte Längskante aufweist, wobei jeder der Vielzahl eingekerbter Streifen entlang der gewellten Längskante mit der zweiten Längskante eines der Vielzahl flexibler Bänder verbunden ist; und
das mindestens eine Basiselement eine Vielzahl von Basiselementen aufweist, die bezüglich des strömenden zweiten Fluids fixiert und mit der geraden Längskante von jedem der Vielzahl eingekerbter Streifen verbunden sind.

3. Vorrichtung nach Anspruch 2, wobei der Fluiddurchgang in operativer Kommunikation mit einem das strömende zweite Fluid aufweisenden Raum ist und wobei das erste Fluid und das zweite Fluid gleich sind.

4. Vorrichtung nach Anspruch 2, die weiter Folgendes aufweist:
eine Vielzahl flexibler Membranen, die innerhalb des polygonalen Rohrs angeordnet und mit den flexiblen Wänden des polygonalen Rohrs verbunden sind,
wobei jede der Vielzahl flexibler Membranen eine Öffnung hat, und
wobei sich jede der Vielzahl flexibler Membranen und jede Öffnung in Abhängigkeit von den durch die dynamischen Wellenbewegungen der Vielzahl flexibler Bänder übertragenen Kräften ausdehnen und zusammenziehen.

5. Vorrichtung nach Anspruch 2, die weiter Folgendes aufweist:
mindestens ein Innenrohr, das innerhalb des polygonalen Rohrs und im Wesentlichen konzentrisch dazu angeordnet ist.

6. Vorrichtung nach Anspruch 7, wobei
der Fluiddurchgang zu einem das zweite Fluid aufweisenden Raum an einem geschlossenen Ende in der ausströmenden Richtung des strömenden zweiten Fluids geschlossen ist,
wobei das mindestens eine Innenrohr mindestens ein hohles Innenohr ist,
wobei das mindestens eine hohle Innenrohr zum Fluiddurchgang an einem offenen Ende des hohlen Innenrohrs in der ausströmenden Richtung des strömenden zweiten Fluids offen ist, und
wobei das erste Fluid aus dem Fluiddurchgang an dem offenen Ende in das hohle Innenrohr eintritt und durch das hohle Innenrohr in einer der primären Strömungsrichtung des strömenden zweiten Fluids entgegengesetzten Richtung transportiert wird.

7. Vorrichtung nach Anspruch 2, die weiter Folgendes aufweist:
eine Turbine, angeordnet in operativer Kommunikation mit dem Fluiddurchgang; und
einen elektromagnetischen Generator, der mit der Turbine operativ verbunden ist;
wobei das Transportieren des ersten Fluids die Turbine erregt, um Elektrizität über den elektromagnetischen Generator zu erzeugen.

8. Vorrichtung nach Anspruch 2, die weiter Folgendes aufweist:
mindestens ein Wegeventil, das innerhalb des polygonalen Rohrs angeordnet und mit den flexiblen Wänden des polygonalen Rohrs verbunden ist, wobei das Wegeventil das Transportieren des ersten Fluids in einer bevorzugten Richtung entlang des Fluiddurchgangs leitet.

9. Vorrichtung nach Anspruch 1, die weiter Folgendes aufweist:
ein elastisches Kernrohr, das vom polygonalen Rohr umschlossen ist und das mittels seines Innenvolumens einen Fluiddurchgang definiert;
wobei das mindestens eine Verformung eindämmende Bauteil eine elastische Spule aufweist, die durch mindestens zwei Punkte entlang ihrer Längenausdehnung mit dem elastischen Kernrohr verbunden ist, die durch mindestens zwei Punkte entlang ihrer Längenausdehnung mit dem polygonalen Rohr verbunden ist und die ein abwechselndes sequenzielles Anziehen und Lösen aufweist, um eine in Längsrichtung variable Querschnittsfläche an das elastische Kernrohr zu übertragen;
wobei jedes der Vielzahl flexibler Bänder darin kontinuierliche Wellenbewegungen aufweist, die mit dem abwechselnden sequenziellen Anziehen und Lösen der elastischen Spule korrelieren; und
wobei dynamische Wellenbewegungen der Vielzahl flexibler Bänder, die durch das strömende zweite Fluid verursacht werden, über die elastische Spule und das elastische Kernrohr Kräfte zu einem ersten Fluid innerhalb des Fluiddurchgangs im elastischen Kernrohr übertragen, um das erste Fluid entlang einer Längsachse des Fluiddurchgangs zu transportieren.

10. Vorrichtung nach Anspruch 9, wobei mindestens ein Punkt einer Innenfläche von mindestens einer Wand der flexiblen Wände des polygonalen Rohrs mit der elastischen Spule verbunden ist.

11. Vorrichtung nach Anspruch 9, wobei die elastische Spule ein elektroaktives Material aufweist.

12. Fluidtransportvorrichtung zum Transportieren eines ersten Fluids (16), die Folgendes aufweist:
ein polygonales Rohr mit flexiblen Wänden mit angrenzenden Paaren flexibler Wände (2), die rotierbar miteinander verbunden sind, wobei das polygonale Rohr (13) einen ersten Fluiddurchgang (13) mit einem langgestreckten hexagonalen Querschnitt definiert und erste und zweite einander entgegengesetzte breitere Wände (2) aufweist sowie erste bis vierte weitere Wände (6), die schmaler sind als die beiden breiteren Wände (2),
wobei im Gebrauch jede der beiden breiteren Wände (2) externe Kontaktflächen aufweist, die in Kontakt mit einem strömenden zweiten Fluid (11) angeordnet und mit kontinuierlichen räumlichen Wellenbewegungen ausgebildet sind, und zwar in einer parallelen Richtung zu einer Längsachse des polygonalen Rohrs (13), das im Wesentlichen parallel zu einer primären Strömungsrichtung des strömenden zweiten Fluids (11) ausgerichtet ist, wobei die kontinuierlichen räumlichen Wellenbewegungen im Wesentlichen ähnliche Wellenperioden und -phasen aufweisen und quer zur Längsachse des polygonalen Rohrs herausragen;
wobei mindestens ein Verformung eindämmendes Bauteil (10) die darin vorliegenden kontinuierlichen räumlichen Wellenbewegungen aufrechterhält;
wobei mindestens ein Basiselement (37) bezüglich eines strömenden zweiten Fluids (16) fixiert und mit dem mindestens einen Verformung eindämmenden Bauteil (10) verbunden ist; und
wobei dynamische Wellenbewegungen der beiden breiteren Wände (2), die durch die Wirkung des strömenden zweiten Fluids (11) auf die externen Kontaktflächen verursacht sind, eine Kraft zu einem ersten Fluid (16) im ersten Fluiddurchgang (13) übertragen, um das erste Fluid (16) entlang einer im Wesentlichen parallel zur ersten Längsachse des polygonalen Rohrs verlaufenden Richtung zu transportieren.

13. Vorrichtung nach Anspruch 12, wobei
die erste breitere Wand (2) von einem ersten flexiblen Band (2) gebildet wird, wobei die zweite breitere Wand (2) von einem zweiten flexiblen Band gebildet wird, wobei das erste und zweite flexible Band (2) jeweils eine erste und zweite Längskante und eine Kontaktfläche aufweisen und wobei jede der ersten bis vierten schmaleren Wände (6) aus einem eingekerbten Streifen (6) gebildet ist, der eine schmale Längskante (8b) und eine gewellte Längskante (8a) aufweist,
wobei die gewellte Längskante (8a) des ersten eingekerbten Streifens (6) mit der ersten Längskante des ersten flexiblen Bandes (2) verbunden ist,
wobei die gewellte Kante des zweiten eingekerbten Streifens mit der ersten Längskante des zweiten flexiblen Bandes (2) verbunden ist,
wobei die gerade Längskante (8b) des zweiten eingekerbten Streifens (6) mit der geraden Längskante (8b) des ersten eingekerbten Streifens (6) verbunden ist,
wobei die gewellte Längskante (8a) des dritten eingekerbten Streifens (6) mit der zweiten Längskante des ersten flexiblen Bandes (2) verbunden ist,
wobei die gewellte Kante (8a) des vierten eingekerbten Streifens (6) mit der zweiten Längskante 8b des zweiten flexiblen Bandes verbunden ist, und
wobei die gerade Längskante 8b des vierten eingekerbten Streifens (6) mit der geraden Längskante 8b des dritten eingekerbten Streifens (6) verbunden ist;
wobei das Basiselement (37) mit dem ersten eingekerbten Streifen (6) verbunden ist; und
wobei das erste und zweite flexible Band und der erste bis vierte eingekerbte Streifen den ersten Fluiddurchgang definieren.

14. Vorrichtung nach Anspruch 13, die weiter Folgendes aufweist:
eine Vielzahl kontinuierlicher elastischer Vorsprünge, die mit einer ersten gewellten inneren Kontaktfläche des ersten flexiblen Bandes gegenüber der ersten gewellten äußeren Kontaktfläche und mit einer zweiten gewellten inneren Kontaktfläche des zweiten flexiblen Bandes gegenüber der zweiten gewellten äußeren Kontaktfläche verbunden sind und die eine Vielzahl von durch das erste Fluid belegten Kanälen definieren.

15. Vorrichtung nach Anspruch 14, wobei ein Querschnitt von mindestens einem der Vielzahl von Kanälen auxetisch ist.

## Revendications

1. Appareil de transport de fluide pour transporter un premier fluide, comprenant :
un tube polygonal (51) constitué de parois flexibles (47) enserrant un passage de fluide et ayant une section transversale polygonale, avec une pluralité de bords de tube correspondant à des coins de la section transversale polygonale ;
une pluralité de rubans flexibles (2), chacun ayant un premier bord longitudinal, un second bord longitudinal et une surface de contact,
dans lequel chacun de la pluralité de rubans flexibles est raccordé le long du premier bord longitudinal à l'un de la pluralité de bords de tube, et
dans lequel la surface de contact fait saillie transversalement à un axe longitudinal de chacun de la pluralité de rubans flexibles (2) ;
au moins un composant retenant la déformation (10) raccordé à l'un des bords longitudinaux d'au moins l'un de la pluralité de rubans flexibles (2) ;
dans lequel, en service, au moins un élément de base (54) est fixé par rapport à un second fluide coulant et raccordé au au moins un composant retenant la déformation (10) ; et
dans lequel l'axe longitudinal de chacun de la pluralité de rubans flexibles (2) est orienté sensiblement parallèlement à une direction d'écoulement primaire du second fluide coulant, et la surface de contact étant disposée en contact avec le second fluide coulant de sorte que des ondulations dynamiques de la pluralité de rubans flexibles (2) provoquées par le second fluide coulant (11) communiquent des forces via les parois flexibles du tube polygonal à un premier fluide à l'intérieur du passage de fluide pour transporter le premier fluide le long d'un axe longitudinal du passage de fluide.

2. Appareil selon la revendication 1, dans lequel :
un volume défini par les parois flexibles du tube polygonal comprend le passage de fluide ;
le au moins un composant retenant la déformation comprend une pluralité de bandes crénelées, chacune ayant un bord longitudinal droit et un bord longitudinal ondulé, dans lequel chacune de la pluralité de bandes crénelées est raccordée le long du bord longitudinal ondulé au second bord longitudinal de l'un de la pluralité de rubans flexibles ; et
le au moins un élément de base comprend une pluralité d'éléments de base fixes par rapport au second fluide coulant et raccordés au bord longitudinal droit de chacune de la pluralité de bandes crénelées.

3. Appareil selon la revendication 2, dans lequel le passage de fluide est en communication opérationnelle avec un espace contenant le second fluide coulant et dans lequel le premier fluide et le second fluide sont identiques.

4. Appareil selon la revendication 2, comprenant en outré :
une pluralité de membranes flexibles situées dans le tube polygonal et raccordées aux parois flexibles du tube polygonal,
dans lequel chacune de la pluralité de membranes flexibles a une ouverture et
dans lequel chacune de la pluralité de membranes flexibles et chaque ouverture se dilatent et se contractent en réponse aux forces communiquées par les ondulations dynamiques de la pluralité de rubans flexibles.

5. Appareil selon la revendication 2, comprenant en outré :
au moins un tube interne situé dans le tube polygonal de manière sensiblement concentrique.

6. Appareil selon la revendication 7, dans lequel :
le passage de fluide est fermé à un espace contenant le second fluide à une extrémité fermée dans la direction aval du second fluide coulant,
le au moins un tube interne est au moins un tube interne creux,
le au moins un tube interne creux est ouvert au passage de fluide à une extrémité ouverte du tube interne creux dans la direction aval du second fluide coulant, et
dans lequel le premier fluide pénètre dans le tube interne creux à partir du passage de fluide à l'extrémité ouverte et est transporté à travers le tube interne creux dans une direction opposée à la direction d'écoulement primaire du second fluide coulant.

7. Appareil selon la revendication 2, comprenant en outre :
une turbine disposée en communication opérationnelle avec le passage de fluide ; et
un générateur électromagnétique raccordé en service à la turbine ;
dans lequel le transport du premier fluide excite la turbine pour générer de l'électricité via le générateur électromagnétique.

8. Appareil selon la revendication 2, comprenant en outre :
au moins une soupape directionnelle située dans le tube polygonal et raccordée aux parois flexibles du tube polygonal, dans lequel la soupape directionnelle dirige le transport du premier fluide dans une direction préférée le long du passage de fluide.

9. Appareil selon la revendication 1, comprenant en outre :
un tube central élastique enserré par le tube polygonal et définissant un passage de fluide par son volume interne ;
dans lequel le au moins un composant retenant la déformation comprend une bobine élastique raccordée par au moins deux points le long de sa longueur au tube central élastique, raccordée par au moins deux points le long de sa longueur au tube polygonal et ayant un resserrement et un relâchement internes séquentiels pour communiquer au tube central élastique une surface en coupe transversale longitudinalement variable ;
dans lequel chacun de la pluralité de rubans flexibles a des ondulations persistantes qui sont en corrélation avec le resserrement et le relâchement alternés séquentiels de la bobine élastique ; et
dans lequel des ondulations dynamiques de la pluralité de rubans flexibles provoquées par le second fluide coulant communiquent des forces via la bobine élastique et le tube élastique central à un premier fluide à l'intérieur du passage de fluide dans le tube élastique central pour transporter le premier fluide le long d'un axe longitudinal du passage de fluide.

10. Appareil selon la revendication 9, dans lequel au moins un point d'une surface interne d'au moins l'une des parois flexibles du tube polygonal est raccordé à la bobine élastique.

11. Appareil selon la revendication 9, dans lequel la bobine élastique est constituée d'un matériau électro-actif.

12. Appareil de transport de fluide pour transporter un premier fluide (16), comprenant :
un tube polygonal ayant des parois flexibles avec des paires adjacentes de parois flexibles (2) qui sont raccordées à rotation l'une à l'autre, dans lequel le tube polygonal (13) définit un premier passage de fluide (13) avec une section transversale hexagonale allongée et présente une première et une deuxième paroi plus larges opposées l'une à l'autre et une première à une quatrième parois restantes plus étroites (6) que les deux parois plus larges (2),
dans lequel, en service, chacune des deux parois plus larges (2) a des surfaces de contact externes disposées en contact avec un second fluide coulant (11) et formées avec des ondulations spatiales persistantes dans une direction parallèle à un axe longitudinal du tube polygonal (13), qui est orienté de manière sensiblement parallèlement à une direction d'écoulement primaire du second fluide coulant (11), les ondulations spatiales persistantes ayant des périodes et des phases ondulatoires sensiblement similaires et ayant une projection transversale à l'axe longitudinal du tube polygonal ;
au moins un composant retenant la déformation (10) qui y maintient les ondulations spatiales persistantes ;
au moins un élément de base (37) est fixe par rapport au second fluide coulant (16) et est raccordé au au moins un composant retenant la déformation (10) ; et
dans lequel des ondulations dynamiques des deux parois plus larges (2) provoquées par l'action du second fluide coulant (11) sur les surfaces de contact externes communiquent une force à un premier fluide (16) dans le premier passage de fluide (13) pour transporter le premier fluide (16) le long d'une direction sensiblement parallèle au premier axe longitudinal du tube polygonal.

13. Appareil selon la revendication 12, dans lequel :
la première paroi plus large (2) est formée d'un premier ruban flexible (2), la seconde paroi plus large (2) est formée d'un second ruban flexible, le premier et le second ruban flexible (2) comprenant chacun un premier et un second bord longitudinal et une surface de contact et dans lequel chacune des première à quatrième parois plus étroites (6) est formée d'une bande crénelée (6) ayant un bord longitudinal droit (8b) et un bord longitudinal ondulé (8a),
dans lequel le bord longitudinal ondulé (8a) de la première bande crénelée (6) est raccordé au premier bord longitudinal du premier ruban flexible (2),
dans lequel le bord ondulé de la deuxième bande crénelée est raccordé au premier bord longitudinal du second ruban flexible (2),
dans lequel le bord longitudinal droit (8b) de la deuxième bande crénelée (6) est raccordé au bord longitudinal droit (8b) de la première bande crénelée (6),
dans lequel le bord longitudinal ondulé (8a) de la troisième bande crénelée (6) est raccordé au second bord longitudinal du premier ruban flexible (2),
dans lequel le bord ondulé (8a) de la quatrième bande crénelée (6) est raccordé au second bord longitudinal (8b) du second ruban flexible, et
dans lequel le bord longitudinal droit (8b) de la quatrième bande crénelée (6) est raccordé au bord longitudinal droit (8b) de la troisième bande crénelée (6) ;
l'élément de base (37) est raccordé à la première bande crénelée (6) ; et
le premier et le second ruban flexible et les première à quatrième bandes crénelées définissent le premier passage de fluide.

14. Appareil selon la revendication 13, comprenant en outré :
une pluralité de saillies élastiques continues raccordées à une première surface de contact interne ondulée du premier ruban flexible opposée à la première surface de contact externe ondulée et raccordée à une seconde surface de contact interne ondulée du second ruban flexible opposée à la seconde surface de contact externe ondulée et définissant une pluralité de canaux occupés par le premier fluide.

15. Appareil selon la revendication 14, dans lequel une section transversale d'au moins l'un de la pluralité de canaux est auxétique.
